# EUROPEAN PATENT APPLICATION

(11) **EP 4 749 718 A1**
(43) Date of publication of application: **27.05.2026**
(21) Application number: 24214705.6
(22) Date of filing: 22.11.2024
(51) Int. Cl.: H01M 4/58, H01M 4/36, H01M 4/62, H01M 10/0525, H01M 4/38

(54) **ELECTROCHEMICAL CATALYST INCLUDING NANO-SILICATE COMPOSITE, MANUFACTURING METHOD THEREFOR, AND ELECTRODE COMPOSITION AND ELECTRODE INCLUDING SAME**

(71) Applicant: G.I.Tech Co., Ltd., Asan-Si Chungcheongnam-do 31408 (KR)
(72) Inventor: KIM, Kang Hyung, 15595 Ansan-si, Gyeonggi-do (KR); YOON, Hyung Keun, 06294 SEOUL (KR)
(74) Representative: Comoglio, Elena

(57) **Abstract**

The nano-silicate composite according to various embodiments may include nano-silicon oxide, nano-silicon, and magnesium silicide between ion-conductive forsterite (Mg₂SiO₄), enstatite (MgSiO₃), and magnesium disodium silicate (Na₂MgSiO₄) particles. A manufacturing method for the nano-silicate composite according to various embodiments may include mixing a silicate precursor, a metal reductant, and additives; and performing a mechano-chemical reaction by mixing the silicate precursor, metal reductant, and additives with beads. An electrode composition according to various embodiments may include the nano-silicate composite of the present disclosure. An electrode according to various embodiments may include the nano-silicate composite of the present disclosure.

## Description

### BACKGROUND OF THE INVENTION

### 1. Field of the invention

The various embodiments of the present disclosure relate to an electrochemical catalyst composed of a nano-silicate composite, a manufacturing method therefor, and an electrode composition and electrode, each including the same electrochemical catalyst. Specifically, the present disclosure is concerned with an electrochemical catalyst composed of a nanosilicate composite including silicate particles with excellent ion conductivity as main ingredients, such as enstatite (MgSiO₃) and forsterite (Mg₂SiO₄), a method for manufacturing same through mechano-chemical reactions, and an electrode composition and an electrode, each including the electrochemical catalyst composed of a nanosilicate composite, wherein the silicate particles are coated with a hydride that exhibits both electrical conductivity and hydrophobicity, thereby enhancing ion conductivity, electrical conductivity, and stability, which in turn improves the coulombic efficiency of electrochemical reactions.

### 2. Description of the Prior Art

In the field of electrochemistry, the recent focus has been on improving the performance related to the driving range and charging speed of electric vehicles. In secondary batteries widely used in electric vehicles, repeated charge and discharge cycles lead to a reduction in coulombic efficiency, and thus, improving charging speed, particularly at low temperatures, is a critical issue. To address this, methods for improving the ion and electrical conductivity of cathode and anode materials are being researched, along with approaches to increase battery capacity by using silicon as an anode material, which has a theoretical capacity ten times greater than that of graphite.

### Advantages and Technical Challenges of Silicon as Electrochemical Material

Silicon (Si) is the second most abundant inorganic element on Earth's surface and is known for its stable structure and ease of extraction, along with advantages such as low cost, non-toxicity, colorlessness, odorlessness, and environmental friendliness. These properties make silicon one of the most promising electrochemical materials, and it is already a fundamental substance in various semiconductor industries.

Silicon materials hold a significant position in next-generation growth industries such as energy, biotechnology, high-performance semiconductors, and sensors, with a growing demand. Among them, nano-silicon is expected to play a role as electrode materials and drug delivery agents in the energy and biotechnology sectors.

In particular, in lithium-ion batteries, silicon materials are predicted to increase battery capacity by tenfold when replacing graphite, while incurring minimal cost increases as an anode material. However, issues such as volume expansion due to lithiation and low ion and electrical conductivity have hindered commercialization.

Various methods have been developed to address these challenges, such as miniaturizing coarse silicon particles or imparting porosity.

First, there is a method of obtaining nano-silicon by etching silicon wafers, but this approach has the disadvantage of long reaction times and high costs associated with industrial safety and environmental treatment due to the extensive use of acids.

Second, there is a method of crushing bulk silicon, such as wafers or panels, through ball milling. Since bulk silicon is a hard material with a hardness of HV 900-1500, obtaining particles smaller than a micron requires prolonged milling, resulting in low productivity. Therefore, efforts are being made to grind easily available metallic silicon into particles about 5 microns in size, encapsulating them with carbon-based organic materials to minimize short circuits caused by volume changes during battery reactions. However, even in this case, the fundamental improvement in low initial coulombic efficiency, i.e., electrochemical charge/discharge efficiency, remains unachieved, limiting the maximization of silicon's battery capacity.

Third, there is a gas synthesis method that grows silicon using silane (SiH₄) gas as a raw material. However, this method involves high costs due to the expensive gas used as the main material, and it requires explosion-proof equipment or highly corrosion-resistant apparatus, resulting in limited batch production for secondary battery materials. Moreover, the high specific surface area of nano-silicon particles leads to an increased formation of irreversible compounds, further exacerbating capacity reduction issues.

Fourth, carbon-coated silicon nanowires can be obtained by a template method using alumina templates. Like the gas synthesis method, this approach involves high costs for the equipment needed for nanowire growth, and the uniformity of silicon distribution and lithium compound formation is inferior to that of nanoparticles.

Fifth, there is a method of mixing nano-silicon oxide particles with microscale silicon particles and reacting them with magnesium vapor in a gas phase to form a stable thin layer of enstatite (MgSiO₃) or forsterite (Mg₂SiO₄) on the surface. A similar method involves applying magnesium plating to the SiOx layer of an anode active material rolled on a roller, followed by applying high current to form enstatite and forsterite on the surface of SiO particles. Enstatite and forsterite exhibit excellent ion conductivity as their oxide crystals form chain structures that facilitate the diffusion of cations like lithium. However, since the enstatite and forsterite layers form thin films of only a few nanometers to tens of nanometers on the particle surface, repeated charge/discharge cycles reduce the initial efficiency to about 30-60%, making it difficult to continuously suppress silicon's volume expansion solely through surface modifications. In particular, on the surface of silicon particles in secondary batteries containing alkali elements from Groups 1 and 2 of the periodic table, the reaction barrier of the carbonate group in the electrolyte is low, causing it to decompose easily. For example, as shown in Formula 1 below, silicon and lithium consume oxygen decomposed from the electrolyte, leading to the formation of an irreversible and insoluble LiₓSiOₓ layer:

Si²⁺ + xLi⁺ + xO²⁻ → LiₓSiOₓ (Formula 1)

As the reaction in Formula 1 progresses, the increase in volume of the insoluble layer raises tensile stress, and when the fracture toughness of the silicon particles decreases, then they are pulverized. As charging and discharging are repeated, new surfaces continue to form, consuming lithium and electrolyte each time. The creation of a new surface results in the formation of irreversible compounds and a reduction in battery capacity. Consequently, silicon particles with only surface layer ion conductivity improvements may show high initial battery capacity, but over repeated cycles, their battery capacity may fall below that of graphite.

Sixth, there is a method of coating the surface of silicon particles with carbon-based materials such as graphite or graphene to suppress electrolyte decomposition reactions on the silicon surface and prevent aggregation between nano-silicon particles. Additionally, silicon alloys can be dissolved in acid to obtain porous silicon, followed by coating the surface with carbon to minimize the formation of Li₄SiO₄ and prevent short circuits caused by huge volume changes. However, this method, even while mitigating the rate of battery capacity reduction, does not completely prevent the rate reduction, and the environmental problems caused by the release of harmful substances during the manufacturing process, along with a significant rise in production costs, remain difficult to resolve.

Seventh, nano-silicon oxide is being applied as a cheaper alternative to nano-silicon to increase battery capacity. Silicon oxide has about one-third the battery capacity of silicon but is more chemically stable, and its lithiation follows the reaction in Formula 2 below:

SiO₂ + xLi⁺ + *x*e⁻ → LiₓSiₓO₅ + Si (Formula 2)

When developing batteries, it is designed so that the lithiation reactions of both metallic silicon and non-metallic silicon oxide are reversible. Particularly, when micron-sized silicon and nano-silicon oxide are mixed, it is expected that the reversible reduction and oxidation reactions will repetitively occur on the surface of silicon oxide as shown in Formulas 3 and 4 in addition to Formula 2:

SiO_{y} + *x*Li⁺ + *x*e⁻ → LiₓO_{y} + Si (Formula 3)

2SiO₂ + *x*Li⁺ + *x*e⁻ → LiₓSiOₓ + Si (Formula 4)

In Formula 3, y ranges between 0.5 and 2, and the reduced silicon, being of nano size, participates in the lithiation reaction to form a lithium-silicon alloy (LiₓSi) as shown in Formula 5:

Si + *x*Li⁺ + *x*e⁻ → LiₓSi (Formula 5)

Thus, silicon oxide can be used as an anode material capable of bonding with lithium ions, and the reactions in Formulas 2 and 3 produce Li₂O, Li₂O₂, and Li₂Si₂O₅ during charging, with less volume change than silicon lithiation, thereby alleviating stress. In this context, efforts to utilize nano-silicon oxide as an anode material to increase the relatively low battery capacity of lithium-ion secondary battery anodes compared to cathodes have continued.

However, in practice, the low ion and electrical conductivity of nano-silicon oxide leads to the generation of overpotential when charging current increases, and the formation of irreversible compounds like Li₄SiO₄, as shown in Formula 4, further reduces battery capacity. Additionally, strong electrostatic attraction between cations and silicon oxide inhibits ion conductivity, slowing down cation mobility in the anode materials, which lowers coulombic efficiency. As a result, with maximal addition of silicon oxide to about 10% to graphite, the improvement in battery capacity is limited.

Eighth, there has been a proposal to form a thin and stable solid electrolyte interface (SEI) film on silicon particles by pre-lithiating them at a higher potential than the electrolyte decomposition potential to suppress lithium and electrolyte consumption and extend battery life. However, forming a thin and stable SEI film is not easy, and the additional processing increases the cost of silicon. Moreover, while the rate of battery capacity reduction slowed in silicon with an pre-lithiated SEI film, the silicon particles still pulverized. Pre-lithiated nano-silicon to minimize the rate of battery capacity reduction remains a high-cost obstacle.

Ninth, a compromise approach involves mixing a small amount of micron-sized silicon with graphite to minimize the volume expansion effect of silicon. During charging, lithium ions are first inserted into the silicon particles at a faster rate than into graphite, and once a certain amount of lithium ions have been inserted, they start to be inserted into the graphite. As lithium ions continue to be inserted into the silicon, once approximately 3.25 mole of lithium ions have been reached, the increase in pressure due to volume expansion makes it difficult for any more lithium ions to be inserted. At this stage, the silicon particles begin to transfer some of the lithium ions previously inserted into them to the still underfilled graphite, resulting in a lithium ion filling rate exceeding 94%, and the silicon particles end up holding around 2.5 mole of lithium ions. However, during discharge, the graphite sends lithium ions to the silicon particles, causing the lithium ions on the surface of the silicon particles to increase again to 3 mole. Once most of the lithium ions have been extracted from the graphite, they are subsequently released from the silicon particles (Moon et al., Interplay between electrochemical reactions and mechanical responses in silicon-graphite anodes and its impact on degradation, Nature Communications, vol. 12, 2021, 2714).

During this side reaction process, where lithium ions are exchanged between the graphite and silicon, the surface of the silicon particles is subjected to repeated volume expansion and contraction as lithium ions are inserted and removed, which can cause the silicon particles to fracture due to tensile stress. Consequently, after dozens of cycles, the consumption of lithium ions and electrolytes becomes significant, leading to a reduction in battery capacity to below the graphite level, limiting the addition of silicon to 2-3% by weight. Coated silicon with carbon can slow down the penetration and diffusion of lithium ions into the silicon, thereby reducing the rate of battery capacity degradation, but it does not completely solve the issue of capacity reduction. When using nano-silicon with a particle size of 100 nm or less, the rate of degradation is further slowed as pulverization is reduced, allowing for higher capacity than graphite in practical applications. Additionally, the reduced travel distance for lithium ions shortens the time required for the ions to move out of the silicon particles during discharge, preventing the accumulation of lithium ions in the silicon particle. However, the cost of nano-silicon is a factor that raises production costs. Despite significant efforts to adopt readily available and lightweight silicon and silicon oxide as anode materials, the industry is still facing challenges in improving ionic and electrical conductivity while suppressing irreversible reactions.

### Challenges in Improving Electrolytes

In batteries, the electrolyte, uniformly distributed within the electrode material, must possess both electrical conductivity and ion conductivity. This ensures that even if contact short circuits occur between electrode material particles, the presence of the electrolyte therebetween facilitates the smooth movement of ions and electrons between the electrode material and the electrolyte, preventing short circuits. However, in practice, various performance degradations occur in batteries due to the low rate of lithium ion dissociation and the low ion conductivity of organic electrolytes. Specifically, functional groups derived from the electrode material, binder, and electrolyte types-such as carboxyl groups, carbonyl groups, alkyl groups, oxygen groups (e.g., ester and ether), hydrocarbon groups, carbonate groups, halogens (e.g., fluorine, chlorine, iodine), nitrogen groups (e.g., amines, imides, and pyridyl), sulfur groups (e.g., sulfate and sulfo groups), phosphoric groups, and boric groups-intervene in the reactions between the anode material and lithium. These lead to irreversible reactions, irreversible lithium intercalation reactions into graphite anode materials, electrolyte degradation caused by side reactions with anode material and impurities, anode material consumption, undesirable redeposition, reduced conductivity between the anode material and electrolyte, binder degradation, particle contact short circuits, cathode particle dissolution, overpotential, overcharging, low coulombic efficiency, and cracking of silicon anode materials, resulting in reduced battery capacity and degraded battery performance. The increased internal pressure caused by gas generation during charge and discharge, and lower-than-design battery capacity, can also be attributed to electrolyte degradation or the formation of irreversible compounds due to such side reactions. For example, in lithium-ion batteries, de-lithiation often results in the loss of oxygen from oxides in the cathode, leading to incomplete reversible reactions during lithiation, where only a portion of the theoretical capacity participates in reversible reactions. For this reason, stabilizing the performance of the electrolyte in the design process is a challenge when using silicon as an anode material, though unfortunately, the reaction mechanisms of electrolytes in batteries are not yet fully understood.

The electrolyte is also a factor in causing voltage drops by inducing oxygen loss from the cathode material in lithium-ion batteries. It is known that hydrogen protons present in the electrolyte dissociate easily due to overpotential during de-lithiation, are inserted into the cathode, and decrease oxygen content (Aghara, et al., Journal of Radio analytical and Nuclear Chemistry, Vol. 265, No. 2, 2005, pp. 321-328; Choi, et al., Electrochemical and Solid-State Letters, Vol. 9, No. 5, 2006, A241-A244).

In anode materials, hydrogen-bonded functional groups that are prone to dissociation in the electrolyte can easily trigger side reactions, disrupting the smooth progression of redox reactions and becoming a major cause of system performance degradation. For example, graphite and carbon-based anode materials are composed of stacked graphene layers or ordered carbon structure with sp2 bonding. These sp2 bonds make numerous dangling bonds at the surface edges, leading to uneven electron density states, which in turn cause the material to easily adsorb nearby gases or moisture. Although graphite and graphene are known to be fairly stable materials, when exposed to moisture in the atmosphere, nitrogen acts as a catalyst to oxidize the edges or adsorb hydroxyl groups, which can interfere with the intercalation of lithium ions from the edges of graphite during the first cycle, blocking the pathway for lithium ion movement and thus reducing battery capacity.

To effectively suppress side reactions in batteries, it is desirable for the electrode material to possess both ion conductivity for cation storage and release, and electrical conductivity for electron movement, ensuring stable redox reactions that suppress side reactions. Silicon and silicon oxide, currently used as anode materials, are hydrophilic and tend to form strong hydrogen bonds with the hydroxyl (OH⁻) groups of moisture when exposed to the atmosphere, followed by additional weak hydrogen bonds that adsorb more moisture, leading to stacking (Chen et al., Water Adsorption on Hydrophilic and Hydrophobic Surfaces of Silicon, Journal of Physical Chemistry C, vol. 122, 2018, pp. 11385-11391; Hertel and Hair, Adsorption of Water on Silica, Nature, vol. 223, 1969, pp. 1150-1151). Since these bonds are difficult to break, -even when heated above 600°C in a vacuum environment-, imparting hydrophobicity to silicon or silicon oxide is not an easy task. Adsorbed Hydroxyl groups in the atmosphere are highly reactive, unlikely to be removed, and often remain as hydrogen bonding in the material throughout the battery manufacturing process.

Hydroxyl groups promote the formation of irreversible compounds like Li₄SiO₄ in silicon or silicon oxide, while inducing oxidation reactions in carbon materials or side reactions with functional groups in the electrolyte, such as oxygen groups, hydrocarbon groups, carbonate groups, halogens, nitrogen groups, sulfur groups, phosphoric groups, or boric groups, leading to the formation of acids that are suspected of causing corrosion, stress corrosion cracking in metal casings, and reduced conductivity. To suppress these effects, it is necessary to process graphite through heat treatment to change turbostratic graphite with fewer sp² bonds or amorphous carbon with irregular structures (Kumar et al., Super Low to High Friction of Turbostratic Graphite under Various Atmospheric Test Conditions, Tribology International, vol. 44, 2011, pp. 1969-1978). The reason for producing turbostratic graphite or amorphous carbon is to suppress the disadvantages of sp² graphite-type 2D bonding by introducing sp³ diamond-type 3D bonding, although this results in lower battery capacity compared to graphite, making it impractical to use amorphous carbon alone as an anode material.

To suppress side reactions caused by moisture adsorption in the atmosphere, raw materials stable in the atmospheric environment, highly pure materials, and methods that shield contact with the atmosphere during processing are considered, but these measures often come with high costs. Moreover, anode materials like graphite or amorphous carbon are often coated on electrode sheet, and to prevent surface cracking, a mixture of hot air and steam is supplied to increase drying speed. In some cases, this is replaced with methods such as infrared or laser heating. However, when the coated layer is heated, localized saturation vapor pressure near the surface of the coated layer increases, causing atmospheric moisture to condense on the surface of the layer. As a result, the higher the temperature of the coated layer, the more susceptible it becomes to moisture adsorption, making it difficult to fully isolate the coated layer from atmospheric moisture unless a vacuum environment is used during heating.

### SUMMARY OF THE INVENTION

The present disclosure aims to address the issues of anode material degradation in silicon and silicon oxide, as well as the low ion conductivity of cathode materials, which are problems inherent to electrochemical materials. To this end, the present disclosure provides an electrochemical catalyst composed of a nano-silicate composite with excellent ion conductivity and a method for manufacturing same. The goal is to improve the ion conductivity and electrical conductivity of electrode materials in electrochemical systems and stabilize redox reactions. Specifically, the nano-silicate composite of the present disclosure consists mainly of nano-silicate particles such as enstatite (MgSiO₃), forsterite (Mg₂SiO₄), or magnesium disodium silicate (Na₂MgSiO₄), which contain asymmetric oxide structures, exhibiting ion conductivity and catalytic effects. The surface of these particles is coated with electrical conductive hydride layers that facilitate electron transport, or hydrogen protons generated during milling are adsorbed into the particle pores, increasing electron concentration. This results in nano-silicate composites with enhanced electron mobility. Consequently, this feature maximizes the initial coulombic efficiency of electrode materials and suppresses anode degradation in graphite-silicon composite anodes. Additionally, between the nano-silicate particles composed of enstatite, forsterite, or magnesium disodium silicate, at least one material such as nano-silicon oxide, nano-silicon, magnesium silicide, or one or more elements from Group 1 and Group 2 alkali metals, divalent transition metals, trivalent transition metals, trivalent metals or semimetals of post-transition metals, and compounds thereof, may coexist.

In general, it is difficult for silicates to possess electrical conductivity, and their ion conductivity is known to be limited to the crystal structures formed under high temperature and high-pressure conditions, such as those in Earth's mantle. However, the nano-silicate composite of the present disclosure is characterized by having both ion conductivity and electrical conductivity through a mechano-chemical reaction. The nano-silicate composite catalyst according to various embodiments of the present disclosure primarily consists of nano-silicate particles composed of enstatite (MgSiO₃), forsterite (Mg₂SiO₄), or magnesium disodium silicate (Na₂MgSiO₄), and nano-silicon, nano-silicon oxide, and nano-magnesium silicide may coexist between the nano-silicate particles. The surfaces of these particles are coated with hydride layers.

To improve electrical conductivity or battery performance, one or more materials of silicon, silicon oxide, magnesium silicide, hydride, alkali metals, divalent or trivalent transition metals, trivalent metal or semimetal of post-transition metals, and one or more compounds thereof may be additionally mixed into the composite catalyst. In the present disclosure, "alkali" refers to elements from Group 1 alkali metals and Group 2 alkaline earth metals in the periodic table. Additionally, the method of adding these supplementary materials may involve one or a combination of methods, including mechano-chemical reactions, mixing, coating, or doping.

The method of manufacturing the nano-silicate composite catalyst according to various embodiments of the present disclosure may include the steps of mixing a silicate precursor, a metal reducing agent, and additives; combining the silicate precursor, metal reducing agent, and additives with beads; and performing a mechano-chemical reaction. The mechano-chemical reaction may further include a first milling step, followed by a second milling step after the first milling.

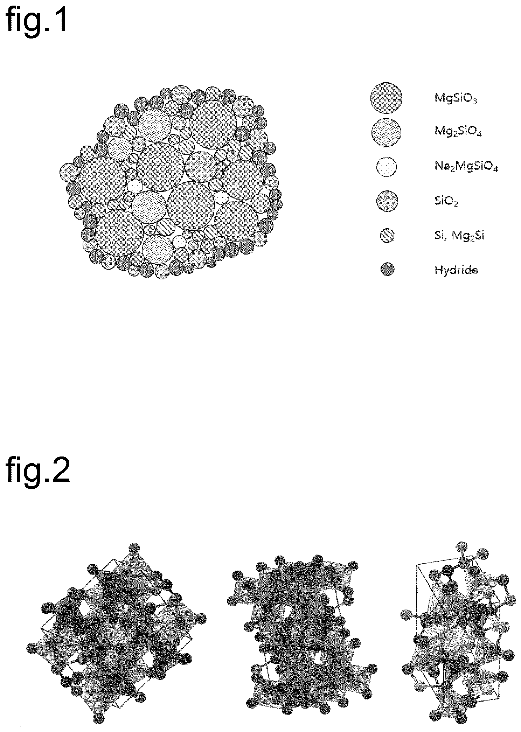

The nano-silicate composite catalyst of the present disclosure, as shown in FIG. 2, is a metal oxide with three-dimensional (3D) porous structures both on the surface and inside the crystal particles. The enstatite, forsterite, or magnesium disodium silicate in the composite exhibits high ion conductivity. Additionally, a hydride layer with electrical conductivity and hydrophobicity is coated on the particle surfaces, enhancing the movement speed of ions and electrons within the electrode material. This improves the charge/discharge rate and durability. A specific example of this is the use of the nano-silicate composite catalyst as an additive to anode materials such as silicon, silicon oxide, or graphite. Silicon and silicon oxide have hydrophilic poles that easily adsorb moisture from the atmosphere, and graphite contains numerous dangling bonds that readily form functional group attachments. The nano-silicate composite of the present disclosure releases protons that bind to the functional groups adsorbed on the surface of these anode material particles and dangling bonds, thereby suppressing side reactions of the anode particles. Furthermore, the ion conductivity of the nano-silicate particles promotes the transfer of cations to the anode material, facilitating smooth electrochemical reversible reactions.

### Features of the Nano-Silicate Composite

The nano-silicate composite catalyst particles of the present disclosure consist of nano-sized particles. Unlike typical silicates, these particles have an asymmetric oxygen arrangement and a structure that encloses space, thereby increasing the diffusion pathways for ions and electrons. Consequently, during charging, ions and electrons can move smoothly along the surface and through the pores inside the crystal structure of the nanoparticles, shortening the charging time. As shown in FIG. 2, the asymmetric oxide structure of the nano-silicate composite of the present disclosure consists of particles in which oxygen atoms are asymmetrically distributed or oxides are connected in chains through edge-sharing or corner-sharing configurations. This structure exhibits electrical polarization and catalytic effects, which suppress side reactions such as gas generation, the formation of corrosive acids, or the production of insoluble slime particles in electrochemical systems. As a result, it reduces battery performance degradation and ensures long life. The electrical polarization and catalytic effects of the asymmetric oxide structures will be explained in detail later in the section describing asymmetric nanoparticles and electrochemical reactions.

The nano-particles of the present disclosure have a large surface area, which increases ion migration pathways, thereby reducing the cation diffusion time in the electrolyte and electrode materials. The metal hydrides on the particle surface accelerate the charge transport speed through proton hopping, thus not only shortening the battery charging time but also enabling excellent low-temperature electrochemical performance without being affected by temperature (Zhu et al., "Hydride, Hydrogen Atom, Proton, and Electron Transfer Driving Forces of Various Five-Membered Heterocyclic Organic Hydrides and Their Reaction Intermediates in Acetonitrile," Journal of the American Chemical Society, vol. 130, 2008, pp. 2501-2516; Sun et al., "High Power and Energy Density Aqueous Proton Battery Operated at -90°C," Advanced Functional Materials, Vol. 31, 2021, 2010127).

In metal oxides with an asymmetric structure of oxygen atoms, such as the nano-silicate in the present disclosure, catalytic effects can be observed that promote reactions. For example, it is known that catalytic activity occurs in asymmetric structure nanoparticles (Jiang et al., "Chiral Ceramic Nanoparticles and Peptide Catalysis," Journal of the American Chemical Society, vol. 139, 2017, pp. 13701-13712) and in metal oxides and silica-based asymmetric nanomaterials (Govan and Gun'ko, "Recent Progress in Chiral Inorganic Nanostructures," Nanoscience, vol. 3, Royal Society of Chemistry, Cambridge, UK, 2016, pp. 1-30).

Therefore, in the case of the nano-silicate of the present disclosure, where the oxygen atoms within the crystal oxide are asymmetrically distributed or where the oxides form chain-linked asymmetric structures, it is understood that this structure can exert an electrochemical buffer effect through electron release due to electrical polarization and proton release from the hydride. This effect suppresses side reactions such as gas generation, the formation of corrosive acids, or the production of insoluble slime, and also functions as a catalyst to promote chemical reactions. Moreover, the chemically stable compounds in the nano-silicate of the present disclosure exhibit anti-poisoning resistance in electrolytes dissolved with alkali compounds, allowing the material to maintain performance even after repeated reactions.

### Electrical Polarization and Catalytic Effects of Nano-Silicate Crystals

Enstatite, forsterite, and sodium magnesium silicate in the present disclosure are polar materials, where oxygen atoms are asymmetrically distributed at the oxides within the crystals due to the pressure caused by collisions during the synthesis process. When the system experiences an imbalance in energy, such as changes in temperature or pressure, electrical polarization occurs in the crystal, releasing electrons. This is known as the pyroelectric effect and is commonly observed during phase transitions in ferroelectric materials containing perovskite structures. Many studies have reported that ferroelectric materials exhibit dielectricity, piezoelectricity, and pyroelectricity. Moreover, studies have also shown that enstatite and forsterite exhibit ferroelectric properties (Hirel et al., "Ferroelasticity in MgSiO3 Bridgmanite: Assessing the Intrinsic Structure and Motion of (110) Twin Walls with Atomic-Scale Simulations," Scripta Materialia, vol. 188, 2020, pp. 102-106; Song et al., "Synthesis and Microwave Dielectric Properties of MgSiO3 Ceramics," Journal of the American Ceramic Society, vol. 91, 2008, pp. 2747-2750; Ando et al., "Quality Factor of Forsterite for Ultrahigh Frequency Dielectrics Depending on Synthesis Process," Japanese Journal of Applied Physics, vol. 47, 2008, pp. 7729-7731; Ohsato et al., "Forsterite Ceramics for Millimeterwave Dielectrics," Journal of Electroceramics, vol. 17, 2006, pp. 445-450; Caracas and Cohen, "Theoretical Determination of the Raman Spectra of MgSiO3 Perovskite and Post-Perovskite at High Pressure," Geophysical Research Letters, vol. 33, 2006, L12S05). Generally, it was known that ferroelectric phenomena, such as dielectricity, occur only through uniform mechanical deformation in bulk or single-crystal materials. However, it was hypothesized that perovskite-structured silicates could exhibit electromagnetic properties, like those of dielectric materials, during phase transitions. These phase transitions were thought to require conditions like Earth's mantle, where high pressures in the range of several gigapascals (GPa) and temperatures above 1200°C are present (Chaplot and Choudhury, "Phase Transitions of Enstatite MgSiO3: A Molecular Dynamics Study," Solid State Communications, vol. 116, 2000, pp. 599-603). To achieve such transitions, it was believed that heating under high temperatures with pressure inside a diamond anvil, containing minute amounts of raw materials, was the only feasible method, making it challenging to achieve phase transitions of enstatite in commercial processes. However, the possibility of reversible phase transitions, where stable and metastable phases coexist at low temperatures, was suggested. It was also reported that when trace amounts of elements were added to perovskite-structured crystals, reversible ferroelectric properties could be observed. For example, in pyroxene containing enstatite crystals, orthoenstatite may coexist with low-temperature enstatite and high-pressure enstatite. When trace elements, such as monovalent and divalent alkali metals, divalent transition metals, and trivalent transition metals or aluminum, are introduced, the chain structure formed by the shared SiO₄ tetrahedra within the enstatite crystal can undergo reversible phase transitions under pressure changes (Aso et al., "Reversible Electric-Field-Induced Phase Transition in Ca-Modified NaNbO3 Perovskites for Energy Storage Applications," Research Square, 2023, preprint, https://doi.org/10.21203/rs.3.rs-2558019/v1; Lin, "Pressure-Induced Polymorphism in Enstatite (MgSiO3) at Room Temperature: Clinoenstatite and Orthoenstatite," Journal of Physics and Chemistry of Solids, vol. 65, 2004, pp. 913-921; Ulmer and Stalder, "The Mg(Fe)SiO3 Orthoenstatite-Clinoenstatite Transitions at High Pressures and Temperatures Determined by Raman Spectroscopy on Quenched Samples," American Mineralogist, vol. 86, 2001, pp. 1267-1274).

As opposed to ferroelectricity, which is polarization caused by uniform pressure or heat in bulk or single-crystal materials, flexoelectricity is caused by uneven deformation of nanomaterials. This phenomenon has revealed that materials not previously considered ferroelectric, or even those previously thought to be non-dielectric, can exhibit piezoelectricity or dielectric phenomena such as in ferroelectrics. For example, bending non-piezoelectric materials like graphene nanoribbons or silicon nanofilms to induce non-uniform deformation has been shown to form local electrical polarization (Jiang et al., "Flexoelectric Nanogenerator: Materials, Structures, and Devices," Nano Energy, vol. 2, 2013, pp. 1079-1092; Krichen and Sharma, "Flexoelectricity: A Perspective on an Unusual Electromechanical Coupling," Journal of Applied Mechanics, vol. 83, 2016, 030801; Bhaskar et al., "Flexoelectric Microelectromechanical System on Silicon"; Sladek et al., "Flexoelectric Effect in Dielectrics Under a Dynamic Load," Composite Structures, vol. 260, 2021, pp. 263-267). It was predicted long ago that when hydrogen binds to nanocrystals with electrical properties, they would become polar materials exhibiting ferroelectricity due to proton behavior under physical changes like pressure. Recently, the ferroelectricity of nanocrystals has been experimentally confirmed and theoretically established as flexoelectricity (Timco and Schloessin, "Physics of the Earth and Planetary Interiors," vol. 17, 1978, pp. 1-5; Samara, "The Hydrogen Bond in Ferroelectricity and the Role of High-Pressure Research," Ferroelectrics, vol. 20, 1978, pp. 87-96; Wang et al., "Twinning in MgSiO3 Perovskite," Science, vol. 248, 1990, pp. 468-471; Ye et al., "Hydrogen-Bonded Ferroelectrics Based on Metal-Organic Coordination," Journal of the American Chemistry Society, vol. 131, 2009, pp. 42-43).

From the above, it can be seen that the nano-silicate crystals of the present disclosure are oxides with asymmetrically positioned oxygen atoms, capable of releasing electrons due to electrical polarization and exhibiting catalytic effects. In electrochemical systems, overcharging, overpotential, overheating, or increased impedance can cause localized dissociation of hydrogen and oxygen in the system, leading to the formation of hydrocarbon groups, carbonate groups, halogen groups, ammonia groups, sulfate groups, nitrate groups, phosphate groups, or borate groups. Once these functional groups are generated, they cause rapid pH changes in the electrolyte, altering the cation deposition voltage or hydrogen evolution voltage. In such conditions, passive films may form on the surface of the current collector due to side reactions, or the electrode material may become poisoned, hindering electrochemical reactions, reducing battery capacity, or, in severe cases, leading to gas generation and thermal runaway. The nano-silicate composite of the present disclosure acts as an electrochemical buffer by quickly and appropriately supplying electrons or protons in situations where functional groups are generated, suppressing side reactions. Additionally, the catalytic effects of the conductive asymmetric polar particles promote smooth electrochemical reactions. Generally, when an electrochemical catalyst has excellent electrical conductivity, the number of electrons it transfers increases, leading to a greater number of electrochemical reaction sites and a longer retention time for electrons at these sites, resulting in more complete reactions.

### Characteristics of the Hydrides Contained in Nano Silicates

The nano silicate composite of the present disclosure contains two types of hydrides: metal hydrides and silicon hydrides. Sodium hydride, the most abundant metal hydride, can be identified with distinct single peaks in XRD analysis. However, magnesium hydride is present in smaller quantities, making it difficult to detect its individual peaks, as they are often obscured by other crystal peaks. Silicon hydride primarily exists in a gaseous state and does not show distinct individual peaks in XRD analysis, as it is also obscured by other crystal peaks. However, it can be indirectly confirmed by the hydrophobicity of the synthesized compound after milling and its role in supplying hydrogen protons to anionic functional groups during battery reactions, leading to an increase in Coulombic efficiency.

Metal hydrides are known to exhibit excellent electrical and ionic conductivity. The high electrical conductivity is due to their metallic nature, where the conduction band and valence band overlap. The high ionic conductivity is attributed to the increase in carrier concentration caused by atomic vacancies that form when metal cations and hydrogen are simultaneously extracted, as well as the defects and distorted structure of metal hydrides, which enhance ionic diffusion (Kim et al., "Fast Lithium-Ion Conduction in Atom-Deficient closo-Type Complex Hydride Solid Electrolytes," Chemistry of Materials, vol. 30, 2018, pp. 386-391; Kort et al., "Ionic conductivity in complex metal hydride-based nanocomposite materials: The impact of nanostructuring and nanocomposite formation," Journal of Alloys and Compounds, vol. 901, 2022, 163474).

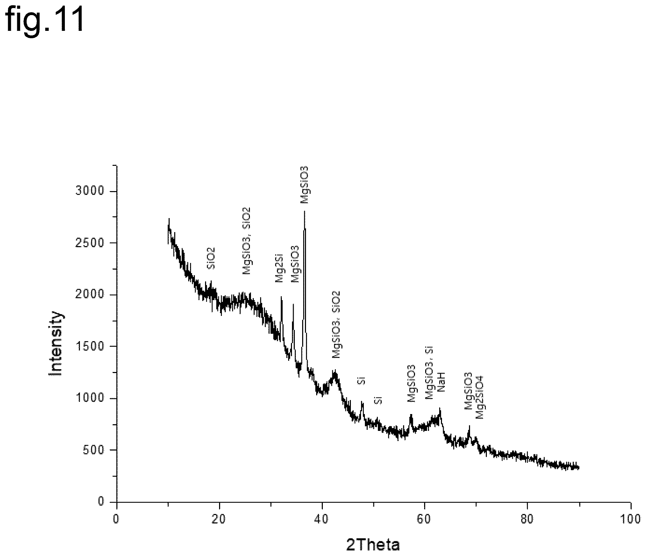

In addition to their metallic properties, metal hydrides can adsorb hydrogen without an energy barrier, allowing rapid charge diffusion within the material through proton hopping, known as the 'Grotthuss mechanism,' which results in very high electrical conductivity (Cukierman, "Et tu, Grotthuss! and other unfinished stories," BBA Bioenergetics, vol. 1757, 2006, pp. 876-885; Meng et al., "Ionic Liquid-Based Non-Aqueous Electrolytes for Nickel/Metal Hydride Batteries," Batteries, vol. 3, 2017, 3010004; Bourrez et al., "Concerted proton-coupled electron transfer from a metal-hydride complex," Nature Chemistry, vol. 7, 2015, pp. 140-145; Wright et al., "Experimental and Computational Investigation of the Aerobic Oxidation of a Late Transition Metal-Hydride," Journal of the American Chemical Society, vol. 141, 2019, pp. 10830-10843). Proton hopping in metal hydrides is not dependent on the surface area of the material, allowing diffusion even at low temperatures, and at high temperatures, correlated barrier hopping in crystals or molecules becomes easier, reducing the impedance of the electrochemical circuit (Jones and Stewart, "Properties of hydrogenated amorphous carbon films and the effects of doping," Philosophical Magazine B, vol. 46, 1982; Brahim et al., "Electrical conductivity and vibrational studies induced phase transitions in [(C2H5)4N]FeCl4," RSC Advances, 2018, 8, 40676). Additionally, while hydrogenation in metal hydrides has been reported to maintain superconductivity under high pressures exceeding hundreds of GPa (Drozdov et al., "Superconductivity at 250 K in lanthanum hydride under high pressures," Nature, vol. 569, 2019, pp. 528-531; Somayazulu et al., "Evidence for Superconductivity above 260 K in Lanthanum Superhydride at Megabar Pressures," Physical Review Letters, vol. 122, 2019, 027001), the metal hydrides in the nano silicate composite catalyst of the present disclosure, as seen in FIGS. 11 to 13 and FIG. 17, remain hydrogenated and stable at atmospheric pressure, bonded to the surface of nano particles.

In addition to ionic and electrical conductivity, electrochemical materials also require hydrophobicity for stability in the atmosphere. Nano materials can achieve hydrophobicity through either carbonization or hydrogenation. Most common examples of carbonization include oil coating and activated carbon coating, but oil coating is unsuitable for electrochemical materials. On the other hand, activated carbon coating and hydrogenation are effective methods for improving the electrical conductivity and atmospheric stability of silicon anodes. The nano silicate particles of the present disclosure maintain hydrophobicity through hydrides, ensuring stability against moisture or hydroxyl groups during processing or after battery fabrication.

In conventional ion batteries, slow ion diffusion at low temperatures results in slower charging times and reduced Coulombic efficiency. At temperatures above 70°C, the increased resistance within the electrodes can lead to thermal runaway. Current strategies to address these issues in ion batteries involve anode material with conductive materials coating, preliminary SEI layer formation, changing the morphology or creating defects in aggregated nano materials for larger surface areas, and functional group modification, chemical intercalation, and elemental doping. However, these methods are limited by the need to simultaneously improve ion diffusion and electrical conductivity, while also preventing side reactions that degrade the electrode materials and electrolytes, and mitigating dendrite formation at high current (Ke et al., "Designing strategies of advanced electrode materials for high-rate rechargeable batteries," Journal of Materials Chemistry A, 2023). In this context, ion batteries, which have relied on low-conductivity organic solvent electrolytes for stable battery reactions, urgently need alternatives that can improve low-temperature charging performance and Coulombic efficiency. Despite the high potential of hydrides to address these industrial demands, few practical solutions have been proposed for applying hydrides in electrochemical systems.

In X-ray diffraction (XRD) analysis of the nano silicate composite catalyst of the present disclosure, sodium hydride is sometimes detected with a distinct peak, but silicon hydride is typically dispersed and thinly adsorbed as a molecular unit film on nano particles, making it difficult to detect as an individual peak. The hydrides in the present disclosure prevent hydroxyl groups from interfering with the absorption of lithium ions at the edges of graphite and the intercalation of lithium ions between graphite layers, whereby the lithium ions absorbed at the edges of graphite during the first cycle reaction easily secure a path for lithium ion movement to increase Coulombic efficiency from the initial stages of battery reactions.

### Role of the Nano-Silicate Composite Catalyst in Electrochemical System

From the detailed explanation above, it can be understood that the surface of the nano-silicate composite catalyst in the present disclosure maintains a balanced state between the electrons charged by the electrical polarization of the silicate and the protons from the metal hydrides. In asymmetric polar materials such as nano-silicates, the presence of protons in metal hydrides makes electrical polarization occur more easily and strongly. Thus, the nano-silicate composite catalyst of the present disclosure holds both the electrons released by electrical polarization and the protons supplied from the metal hydrides, which allows itself to function as an electrochemical buffer that suppresses cations or anions generated in side reactions from interfering with redox reactions in electrochemical systems. The nano-silicate composite catalyst of the present disclosure also exhibits a catalyst effect by promoting stable redox reactions due to its asymmetric polarity.

Inside secondary batteries, oxidizing agents such as hydroxyl or halogen anions are often generated from the electrolyte and additives by side reactions during electrochemical reactions, causing pH changes in the electrolyte and increasing overpotential. Changes in electrolyte pH affect proton concentration, solubility of metal salts and additives, and reaction potential, increasing species transition and destabilizing electrochemical reactions.

For example, in the presence of silicon in the anode materials, during the first discharge reaction, silicon transforms into an amorphous Li-Si alloy, then crystallizes into the Li₁₅Si₄ phase during voltage increases. During charging, the Li₁₅Si₄ phase undergoes a reversible reaction back into crystalline silicon, but some of it remains in the Li₁₅Si₄ phase due to electrical short circuits caused by volume changes. Since fluorinated radicals like LiF and PF₅ exist in the battery, they combine with silicon to form irreversible compounds such as Li₂SiF₆, leading to decreased battery efficiency.

However, in electrodes containing the nano-silicate of the present disclosure, the protons from the metal hydride suppress the side reactions caused by hydroxyl groups. Additionally, during charging, the asymmetric nano-polar materials act as catalysts, guiding the reaction between lithium and silicon in the anode to form amorphous Li-Si alloys or lithium-silicon alloys like Li₁₂Si₇, Li₇Si₃, Li₁₃Si₄, Li₁₅Si₄, and Li₂₂Si₅, or stable solid electrolyte interfaces (SEIs) such as Li₄SiO₄, Li₂SiO₃, and Li₂Si₂O₅, thereby sustaining the reversible reactions and maintaining a high initial coulombic efficiency.

In the electrolyte, the metal hydrides of the nano-silicate react with hydroxyl groups before reacting with functional groups, including carboxyl groups, carbonyl groups, alkyl groups, oxygen groups (e.g., ester and ether), hydrocarbon groups, carbonate groups, halogens (e.g., fluorine, chlorine, iodine), nitrogen groups (e.g., amines, imides, and pyridyl), sulfur groups (e.g., sulfate and sulfo groups), phosphoric groups, and boric groups. By Interacting with hydroxyl groups, the metal hydrides prevent the electrolyte decomposition.

Furthermore, in electrochemical reactions, the precipitation of metal cations resembles a plating process. As a result, the discoloration or corrosion pits on the surface of the current collector in the secondary battery after repeated charge-discharge cycles can indirectly confirm that passivation due to the generation of insoluble slime particles is occurring microscopically, similar to the plating cathode in a secondary battery current collector. These slime particles are primarily composed of metals like alkali metals, iron, copper, nickel, and manganese, as well as cross-linked binders. It is difficult to avoid slime particle generation in electrochemical reactions when containing organic binders and iron or copper in the electrode materials. However, the nano-silicate composite catalyst of the present disclosure minimizes the formation of slime particles and suppresses side reactions at the current collector interface due to its electrochemical buffer effect and the catalytic effect of its asymmetric polar crystal structure, thereby improving the coulombic efficiency of electrochemical reactions.

### Industrial Applications of the Nano-Silicate Composite Catalyst

Based on the principles described above, the nano-silicate composite catalyst of the present disclosure, due to the structural uniqueness of nano-silicate with three-dimensional porous structures, can exhibit effects such as ion diffusion, capillary absorption, electromagnetic shielding, light trapping, wavelength modulation or refraction, and antimicrobial properties through local oxygen vacancies in the metal oxides or localized surface plasmon resonance (LSPR) phenomena. Additionally, the electron and proton release, along with the catalytic effect of the nano-silicate composite, induces stable redox reactions in electrochemical systems, improving initial coulombic efficiency and low-temperature ion diffusion properties, thus enhancing long-term performance.

As an asymmetric perovskite structure, the nano-silicate composite catalyst of the present disclosure possesses structural stability, providing excellent mechanical strength and high-temperature stability, which ensures long lifetime performance. Through the high chemical stability of the perovskite catalyst and the properties of surface alkali hydrides, the catalyst reduces electrical resistance, lowers impedance, and consequently decreases heat generation. Furthermore, the internal vacancies of the asymmetric perovskite structure promotes cation diffusion, resulting in excellent and stable ion conductivity. The nano-silicate composite catalyst of the present disclosure promotes a solid electrolyte interface (SEI) that facilitates cation intercalation, enabling natural graphite to achieve charge-discharge speeds equivalent to or even exceeding that of artificial graphite. The perovskite catalyst containing alkali hydride included may also reduce the amount of active anode material required. By suppressing side reactions, the perovskite catalyst enables stable charge-discharge cycles. The stable SEI formed on natural graphite with perovskite catalyst maximizes energy storage capacity and exhibits excellent charge-discharge speed. Additionally, the cost is approximately half that of other silicon additives, providing significant price competitiveness.

As a shielding material, nano-silicate of the present disclosure can prevent semiconductor signal interference by significantly reducing the energy of incoming neutrons from cosmic rays colliding with protons in hydrides of similar mass. When the nano-silicate of the present disclosure is used as aerosol dispersed particles (SAS) in the stratosphere, it is expected to improve global warming by providing shielding effects against harmful ultraviolet rays and cosmic radiation. In the ionosphere, it is also expected to reduce ionized nitric oxide anions, nitrogen- or oxygen-derived anions, generated by cosmic radiation and ultraviolet rays.

In addition, the nano-silicate composite catalyst can be used in electromagnetic shielding materials, semiconductor packaging, quantum dots (QDs), tire fillers, inks, conductive pastes, multilayer coating pastes for polar materials, adsorbents, and shading materials.

The reason the nano-silicate composite of the present disclosure acts as a stable catalyst is due to the rapid electron release caused by electrical polarization in asymmetric polar materials, combined with the proton release from metal hydrides. Unlike hydrogen atoms participating in hydrogen bonding in electrolytes or electrode materials that dissociates easily in electrochemical systems, the hydrogen in metal hydrides is ionically bonded and does not dissociate easily. The metal hydrides in the nano-silicate composite catalyst have excellent abilities to accept hydrogen bonds or donate protons, suppressing gas generation and the formation of irreversible compounds caused by side reactions in electrochemical systems, thereby improving the rate of reversible reactions, coulombic efficiency, and lifespan. Similarly, when applied to metal-air battery membranes, it suppresses oxygen formation, preventing membrane degradation and potentially replacing platinum catalysts.

Since the nano-silicate composite of the present disclosure is manufactured using a mechano-chemical reaction method, it does not require high-temperature heat treatment or chemical reagents, saving energy and being environmentally friendly. The nano-silicate composite catalyst of the present disclosure can also serve as an alternative to meet the industrial demand for improved conductivity in general oxide-based electronic materials.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a schematic diagram of the nano-silicate composite catalyst according to various embodiments of the present disclosure;
FIG. 2 illustrates an example of the crystal structures of enstatite, forsterite, and sodium magnesium silicate included in the nano-silicate composite catalyst of the present disclosure;
FIG. 3 is a process flowchart of the method for manufacturing the nano-silicate composite catalyst according to various embodiments of the present disclosure;
FIG. 4 is a diagram of the molecular structure of sodium silicate, an example of a silicate precursor used in the manufacturing method of the present disclosure;
FIG. 5 is a diagram explaining the action of the beads and raw material mixtures within a container during milling, an example of a mechano-chemical reaction;
FIG. 6 is a photograph of the sodium silicate raw material used in the embodiments of the present disclosure;
FIG. 7 is a photograph of the magnesium chip raw material used in the embodiments of the present disclosure;
FIG. 8 is a photograph of zirconia beads;
FIG. 9 is a photograph taken one hour after milling in Example 1;
FIG. 10 is a photograph taken four hours after milling in Example 1;
FIG. 11 shows the XRD analysis results of Example 1;
FIG. 12 shows the XRD analysis results of Example 2;
FIG. 13 shows the XRD analysis results of Example 3;
FIG. 14 shows the XRD analysis results of Example 4;
FIG. 15 shows the XRD analysis results of Example 5;
FIG. 16 shows the XRD analysis results of Example 6.
FIG. 17 shows the XRD analysis results of Example 7;
FIG. 18 shows the XRD analysis results of the comparative example;
FIG. 19 shows the battery test results of Example 1; and
FIG. 20 shows the battery test results of natural graphite.

### DETAILED DESCRIPTION OF THE EXEMPLARY EMBODIMENTS

Hereinafter, various embodiments of this document will be described with reference to the accompanying drawings. The embodiments and terms used herein are not intended to limit the technology described in this document to specific implementations but should be understood to include various modifications, equivalents, and/or alternatives of these embodiments.

### Nano-Silicate Composite Catalyst and Manufacturing Method therefor

The nano-silicate composite according to various embodiments of the present disclosure is characterized by being manufactured through a mechano-chemical reaction that applies mechanical energy.

As shown in FIG. 1, the nano-silicate composite catalyst according to various embodiments of the present disclosure primarily consists of enstatite and forsterite, and may also include sodium magnesium silicate, nano-silicon oxide, nano-silicon, magnesium silicide, alkali metals from Groups 1 and 2 of the periodic table, divalent or trivalent transition metals, trivalent elements of post-transition metals, and compounds thereof. Particularly, the surface of these particles may be coated with metal hydrides. In the XRD analysis of the nano-silicate composite of the present disclosure, the intensity of the peaks represents the content of the respective materials, and while the relative intensity values and peak areas can roughly estimate the fractions of these materials, they are not reliable for quantitative results. Therefore, in the present disclosure, the sum of the XRD peak intensities of ion-conductive materials such as enstatite, forsterite, sodium magnesium silicate, and sodium hydride should be greater than the sum of the peak intensities of materials with lower ion conductivity, such as nano-silicon, nano-silicon oxide, and magnesium silicide, in order to control the quality of the nano-silicate composite catalyst in mass production. For example, the sum of the XRD peak intensities of enstatite, forsterite, and sodium hydride in the nano-silicate composite catalyst of the present disclosure may be approximately 2.5 to 7 times greater than the sum of the peak intensities of nano-silicon, nano-silicon oxide, and magnesium silicide.

The nano-silicate composite catalyst of the present disclosure consists of nano-silicon, nano-silicon oxide, and magnesium silicide particles dispersed between enstatite, forsterite, and sodium magnesium silicate particles, and these particles are aggregated with a coating of metal hydrides on their surfaces. The size of the aggregate particles can range from 50 nm to several microns. Preferably, the nano-silicate composite catalyst of the present disclosure consists of particles aggregated to sizes ranging from 100 nm to 1000 nm. Aggregated particles provide a good solution to overcoming the low tap density and low battery capacity often seen when using particles in the nano state.

The enstatite and forsterite, which are components of the nano-silicate obtained through a mechano-chemical reaction, are essential minerals in pyroxene and olivine, which make up Earth's mantle, indicating their high thermal stability. Moreover, the vacancies within the crystal structures of enstatite and forsterite serve as 3D pathways and storage spaces for charge carriers like lithium ions, offering a buffering effect against volume changes during lithiation.

In particular, the enstatite included in the nano-silicate composite catalyst of the present disclosure is characterized by having an asymmetric crystal structure. The asymmetric crystal structure of enstatite makes internal spaces, improves ion conductivity, and exhibits catalytic effects. When enstatite is synthesized by conventional firing processes, a symmetric structure with few internal spaces is obtained. However, the present disclosure achieves enstatite with a tilted, asymmetric crystal structure through a mechano-chemical reaction.

Specifically, FIG. 2 illustrates examples of the crystal structures of enstatite, forsterite, and sodium magnesium silicate included in the nano-silicate of the present disclosure, from left to right. With reference to FIG. 2, magnesium atoms (orange spheres), oxygen atoms (red spheres), sodium atoms (yellow spheres), and silicon atoms (blue spheres) form oxides that make chain structures by sharing edges and corners. The vacancies within the structure serve as pathways for ion or nano-drug transport, and the oxide surfaces can act as storage spaces for ions or nano-drugs.

Enstatite and forsterite in the present disclosure are obtained by adding a metal reducing agent and applying mechanical energy to reduce the materials, resulting primarily in monoclinic or orthorhombic structures that are formed during rapid cooling at high temperatures.

Generally, enstatite obtained under high pressure or high temperature has octahedral SiOe oxides connected through face-sharing, making electron transport difficult due to Coulomb repulsion between cations, and lacking interlayer pathways in the oxide layer, resulting in low ion conductivity. A structure that facilitates ion movement includes doping or the intercalation of alkali elements between oxide planar layers, or superionic conductors such as NaSICON, which form chain-type structures where corner-sharing or edge-sharing oxides exist. NaSICON is characterized by a chain-like connecting structure in which phosphate and sodium oxides, which are high in ion diffusion rate, are connected in a chain-like mode in octahedral ZrOe and tetrahedral SiO₄ oxides. As shown in FIG. 2, the silicate composite catalyst of the present disclosure also features a chain structure of connected magnesium and silicon oxides, allowing for easy ion movement.

The enstatite, forsterite, and sodium magnesium silicate in the present disclosure have monoclinic or orthorhombic structures, consisting of octahedral MgOe, SiOe, pentacoordinate NaO₅, or tetrahedral SiO₄, MgO₄, and NaO₄, which are connected by corner-sharing or edge-sharing in chain-like forms, facilitating ion movement through their 3D structures, thereby contributing to increased lithium-ion diffusion rates. The edge-sharing parts of the oxides within the nano-silicate crystals in the present disclosure have high oxygen concentrations and short distances between the central cations, resulting in lower conduction band energy and relatively higher electrical conductivity. The corner-sharing parts, on the other hand, exhibit relatively higher ion conductivity and p-type electrical conductivity due to vacancies, making them less electrically conductive than the edge-sharing parts.

The high surface area of the nano-particles, along with the internal vacancies in the crystals, not only serve as ion transport pathways but also act as storage spaces for dopants or drugs that bind with ions in applications such as batteries and medical fields. Additionally, the hydrides coated on the surface of the silicate particles of the present disclosure, such as sodium hydride (NaH), silicon hydrides (SiH, SiH₂, and SiH₄), or magnesium hydride (MgH₂), exhibit high electrical conductivity due to their metallicity and proton hopping. In conventional technologies, oxides with high ion conductivity often have low electrical conductivity, which limits electron movement during charging and prevents higher charging speeds. Furthermore, high-current charging leads to increased impedance, resulting in electrolyte degradation and reduced battery capacity. The excellent ion conductivity and chemical stability of the nano-silicate particles in the present disclosure, combined with the high electrical conductivity of the metal hydride layer on their surface, maximize the performance of the nano-silicate particles as electrode or electronic materials. The properties of the nano-silicate particles in the present disclosure suggest the potential to solve problems associated with low electrode compatibility in oxide solid electrolytes, low stability in sulfide solid electrolytes, low ion conductivity in phosphide solid electrolytes, and low ion conductivity and stability in polymer solid electrolytes.

With vacancies formed on the surfaces and interiors thereof, the silicate nanostructures in the present disclosure are associated with plasmon at the interior and outer surfaces thereof to exhibit localized surface plasmon resonance (LSPR) phenomena, thus absorbing, modulating, or refracting infrared wavelengths. These characteristics can be further enhanced when metal ions or hydrides are coated on the surface vacancies. When a light-absorptive material is added to solar cells, these properties can improve light absorption efficiency and increase the speed of electron-hole pair transport, thereby improving overall efficiency. Furthermore, the magnetic field formation effect of the asymmetric crystals can be utilized for electromagnetic shielding materials and quantum dot materials. The interfaces between nano-silicate particles facilitate electrolyte transport, and the metal hydrides adsorbed on the surfaces of the nano-silicate particles reduce cell impedance, suppressing internal temperature rise and battery capacity degradation. These effects are unique to nanostructures and do not appear at micron sizes.

Meanwhile, enstatite in the present disclosure can exhibit X-ray diffraction (XRD) peaks at 25.0-27.0°, 33.9-34.8°, 36.0-37.0°, 41.5-43.5°, and 61.0-63.0°, while forsterite may show peaks at 20.0-22.0°, 25.0-26.5°, 36.0-37.0°, and 69.0-70.0°.

The individual particles that make up the nano-silicate composite catalyst in the present disclosure may be monodispersed nano-particles with an average diameter of 2 to 150 nm, as calculated by the Scherrer Formula.

Even if the average particle size of the nano-particles is 2 to 150 nm, when nano-silicon or nano-silicon oxide particles, which are polar, aggregate, the dispersion effect of the monodispersed particles is difficult to achieve. However, in the present disclosure, the nano-silicon and nano-silicon oxide particles are monodispersed among the enstatite and forsterite particles, with the advantage that the dispersion effect is not saturated.

Moreover, if nano-sized silicon oxide is added and dispersed as an anode material for lithium batteries in the nano silicate composite catalyst of the present disclosure, the catalyst has the characteristic of not undergoing fragmentation during the lithiation process. The reason why fragmentation does not occur during lithiation in monodispersed particles can be explained by the effect of free silanol groups. The free silanol effect occurs when hydroxyl (OH⁻) groups are adsorbed onto the surface of the nanoparticles, creating independent free silanol groups that induce electrostatic interactions. These free silanol groups weaken the binding force between the nanoparticles and the charge carriers, which are cations, thereby improving ionic conductivity. As a result, the free silanol groups suppress excessive binding of lithium ions to the silicon oxide particles. Furthermore, in nano silica particles, a local electric field is formed around the particle surface, leading to the accumulation of charge carriers with opposite charges, which results in a space-charge effect that blocks charge movement. This electric field, generated on the surface of the nanoparticles, halts charge movement, slowing down the chemical reaction rate and allowing the formation of a uniform layer. These characteristics tend to manifest more readily when the particles exhibit dispersion behavior similar to colloids or monomolecules, which is more easily observed in nanoparticles.

On the other hand, bulk particles larger than micron size are less likely to exhibit the free silanol effect or space-charge effect due to their difficulty in dispersing like colloids or monomolecules. Moreover, in cases where nanoparticles are agglomerated, such as conventional nano-silicon or nano-silicon oxide, the silanol groups on the particle surfaces are linked in a group state, making it difficult for free silanol groups to form, and the space-charge effect due to independent electric fields cannot be expected. Therefore, even if they are nano-sized, adding large amounts of undispersed silicon or silicon oxide to the anode makes it difficult to expect improvements in ionic conductivity.

On the other hand, in the nano silicate composite catalyst of the present disclosure, silicon and silicon oxide are nano-sized and uniformly dispersed around the main components, enstatite and forsterite, during the mechanochemical reaction process. This allows for the achievement of both essential requirements for improving conductivity: nanometer sizing and monodispersion.

The nano silicate composite catalyst particles of the present disclosure have particle boundaries that increase the diffusion pathways for lithium ions. As a result, during charging, lithium ions can move smoothly in sequence along the particle boundaries such as surfaces and internal pores, shortening the charging time. Even if the increase in surface area due to the pulverizing of silicon particles during the charging and discharging process is repeated that the nano silicate can suppress the irreversible compound formation, thus minimizing the degradation of battery performance caused by electrolyte consumption.

The nano silicate composite catalyst of the present disclosure can be manufactured through a mechanochemical reaction by mixing silicate precursors, metal reducing agents, and additives, and applying mechanical energy. When the mixture of silicate precursor particles and metal reducing agents-such as sodium silicate particles and magnesium particles-is subjected to mechanical energy, either one or both of the sodium silicate and magnesium melts and undergoes a chemical reaction. This reduction process initially produces intermediates such as silicon oxide decomposed from sodium silicate, sodium oxide, magnesium silicide, Na₆Si₂O₇ and Na₄SiO₄. The water bound to the sodium silicate also decomposes, generating hydrogen protons and oxygen atoms. Subsequently, these intermediates react with each other, gradually disappearing, and nano-sized enstatite, forsterite, silicon oxide, reduced silicon, metal hydrides, and hydrogen gas are formed. As the reaction progresses, sodium silicate, magnesium silicide, and silicon oxide react to produce a final nano silicate composite catalyst. The main components of this catalyst are enstatite and forsterite, with silicon and small amounts of silicon oxide dispersed between them. Additionally, metal hydrides are coated on the surfaces of these particles. Of course, trace amounts of intermediates may remain due to differences in molar ratios of the silicate precursors and metal reducing agents, inhomogeneities in the mechanochemical reaction, or insufficient reaction time.

The principle behind the synthesis of the nano silicate composite as nanoparticles is explained as follows: An example of a silicate precursor is xerogel sodium silicate, which is a nanometer-sized combination of SiO₂:Na₂O oxides. In the mechanochemical reaction process of the present disclosure, the xerogel sodium silicate reacts instantaneously with the metal reducing agent, so there is no time for crystal growth, and the reaction products remain as nanoparticles. The resulting nano silicate composite minimizes volume expansion within the electrode and, due to the metal hydride layer, which has excellent electrical conductivity, increases the mobility of electrons within the electrode material. This helps to suppress dendrite growth and the formation of irreversible compounds caused by non-uniform metal ion reduction reactions. While silicates such as enstatite, forsterite, and magnesium disodium silicate have high ionic conductivity, they have the disadvantage of low electrical conductivity. However, the nano silicate particles of the present disclosure have metal hydride layers of high electrical conductivity coated on the surfaces thereof, which provide both ionic and electrical conductivity. The silicon oxides within enstatite, forsterite, and magnesium disodium silicate do not have strong bonding with lithium ions, allowing the potential difference between the cathode material and the anode material to be maximized, thus increasing the battery voltage. Additionally, enstatite and forsterite have melting points of 1577°C and 1898 °C, respectively, providing the advantage of stability at high temperatures.

### Applications of Nano-Silicate Composite Catalyst with Ion and Electrical Conductivity

As discussed earlier, the nano-silicate composite catalyst of the present disclosure can exhibit various effects, such as ion diffusion, capillary absorption, electromagnetic shielding, light trapping, wavelength modulation or refraction, and antimicrobial properties, due to its unique structural features, including 3D porous structures on the surface of the nanostructure and within the crystal particles, as well as local oxygen vacancies or localized surface plasmon resonance (LSPR) phenomena in the metal oxides. Therefore, it can be used in energy storage applications, such as in electrode compositions and electrodes for secondary batteries, fuel cells, and supercapacitors. It can also be applied in medical fields for contrast agents, drug delivery systems, cell scaffolds, or dental restoratives, as well as in tire fillers, inks, conductive pastes, absorbents, shading materials, electromagnetic shielding materials, flexible semiconductor packaging, solar cells, quantum dots (QDs), and stratospheric aerosol scattering (SAS) particles to mitigate global warming. In particular, electrochemical double-layer capacitors (EDLCs) store charges through reversible ion adsorption on the electrode surface, enabling high power density. However, due to the lack of sufficient porosity in the electrode active material, the effective surface area is limited, leading to a low energy density due to the reduced ion adsorption capacity. Additionally, metal-organic frameworks (MOFs) and redox supercapacitors offer high energy density, but their low electrical conductivity leads to reduced power density. By adding the functional nano-silicate of the present disclosure, the ion absorption in the 3D nanostructure and the high electrical conductivity of the surface metal hydride can improve the energy-power density balance.

In secondary batteries and fuel cells, the nanosizing of particles increases the surface area available for ion and electron interactions, thereby reducing cation diffusion time in the electrolyte and anode, which not only shortens the charging time but also stabilizes the battery reactions, extending the durability of the battery. Particularly in anodes, the nano-silicate composite catalyst can improve the low ion conductivity of carbon or silicon oxide, thereby enhancing the initial coulombic efficiency and durability. Additionally, in cathodes, concentration gradients are applied to the crystal particles to solve the problem of microcracking caused by voltaic and volume changes according to phase transitions during charge and discharge cycles. Cracks allow the electrolyte to penetrate into the crevices of the cathode crystals, reacting with newly exposed surfaces and forming additional SEI layers, which reduces battery capacity due to the consumption of cathode material and electrolyte. Therefore, for high-nickel cathode materials, processes such as coating the surface of the cathode crystals with manganese cathode materials or low-nickel cathode materials are used to form concentration gradients. In such cases, the nano-silicate coating process of the present disclosure can replace the existing process, reducing both process and material costs. The nano-silicate coating layer improves ion conductivity in the cathode material crystals and promotes reversible reactions, thus increasing the coulombic efficiency and enabling the cathode materials to reach their maximum performance.

### Manufacturing of Nano-Silicate Composite Catalyst via Mechano-Chemical Reaction

As explained in the foregoing, the present disclosure provides a method for manufacturing a nano-silicate composite catalyst through a mechano-chemical reaction that applies mechanical energy. Since the nano-silicate composite is manufactured through a mechano-chemical reaction, the process does not require high-temperature heat treatment or chemical reagents, leading to energy savings and an environmentally friendly approach.

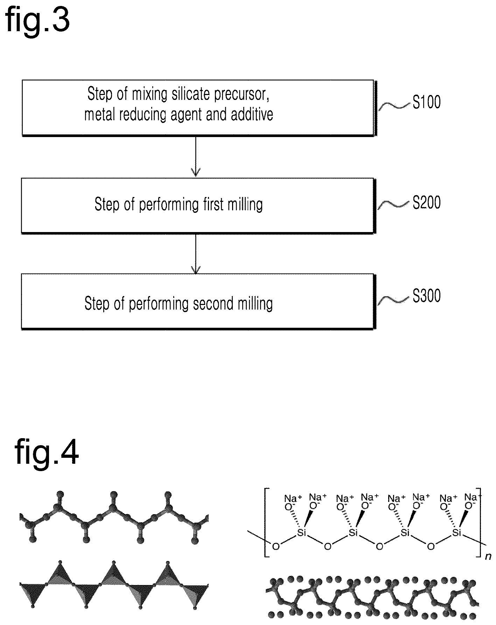

Specifically, referring to FIG. 3, the manufacturing method for the nano-silicate composite catalyst of the present disclosure includes the steps of: (S100) mixing the silicate precursor, metal reducing agent, and additives; (S200) adding beads to the mixture of the silicate precursor, metal reducing agent, and additives and performing a first milling for the mechano-chemical reaction; and (S300) performing a second milling after the first milling.

In the step of mixing the silicate precursor, metal reducing agent, and additives (S100), essential raw materials such as the silicate precursor and metal reducing agent are prepared, along with optional additives for promoting the reaction, controlling reaction heat, suppressing side reactions with carbon or nitrogen, adjusting the binding strength of the raw material mixture, or lowering the melting point during the process reaction, before mixing the materials together.

Specifically, the silicate precursor in the present disclosure is a silicate consisting of cation and anion compounds, and preferably, it is a metasilicate with various silicates in MO₃²⁻ form connected in ring structures. Here, "M" represents silicates of metalloid or metal, where the oxygen bound to the metalloid silicate is typically double that of the metal silicate.

The silicate precursors used in the present disclosure include alkali-containing silicates, which may contain alkali metals or alkaline earth metals, or silicates containing transition or post-transition metals. Examples of alkali-containing silicates include sodium silicate, sodium-magnesium silicate, sodium-aluminum silicate (NaAlSi₂O₆), calcium silicate, calcium-magnesium silicate (CaMgSi₂O₆), tremolite (Ca₂Mg₅Si₈O₂₂(OH)₂), calcium-aluminum silicate, calcium-manganese silicate (CaMn₄Si₅O₁₅), (Mn,Ca)₅Si₅O₁₅, (Fe,Ca)₇Si₇O₂₁, calcium-titanium silicate, Ca₆Si₆O₉₇(OH)₂, Ca₃Si₃O₉, Ca₂NaHSi₃O₉, Ca₂Sn₂Si₆O₁₈·4H₂O, lithium silicate (Li₂SiO₃), lithium-aluminum silicate (LiAlSi₂O₆), magnesium silicate, lithium-magnesium silicate, potassium silicate, potassium-aluminum silicate, strontium silicate (SrSiO₃), Sr₂(VO)₂Si₄O₁₂, barium silicate (Ba₂Si₂O₆), and Ba₂Si₄O₈(OH)₄·4H₂O. Other examples include silicates containing transition or post-transition metals, such as aluminum silicate, iron silicate, manganese silicate, and zinc silicate. Further examples include copper-germanium silicate (CuGeOs), iron silicate (Fe₉Si₉O₂₇), and lead silicate (Pb₁₂Si₁₂O₃₆).

The silicate precursor in the present disclosure is preferably in a gel phase, and a specific example is dry gel sodium silicate, which contains nano-sized SiO₂:Na₂O silicate particles.

Sodium silicate is commonly available in hydrated form, also known as colloidal silicon oxide or silicon oxide sol, and it can be obtained by treating quartz sand with caustic soda or soda ash using steam in a reactor. The types of sodium silicate produced include Na₂SiO₃, Na₂Si₂O₅, Na₄SiO₄, and Na₆Si₂O₇, with Na₂SiO₃ being the most commonly available, consisting of nanoparticles of two oxides SiO₂:Na₂O dispersed in a colloidal state. In the present disclosure, sodium silicate is preferably in the form of a dry gel. The general reaction to obtain sodium silicate in a sol phase is as shown in Formula (6):

2NaOH + SiO₂ → Na₂SiO₃ + H₂O (Formula 6)

Alternatively, quartz sand can be melted with soda ash to produce sodium silicate through the reaction in Formula (7):

Na₂CO₃ + SiO₂ → Na₂SiO₃ + CO₂ (Formula 7)

In the general process of Formula 6, quartz sand and caustic soda are heated with steam to produce sodium silicate, and depending on the water content, it is produced in a liquid state with varying amounts of bound water. Commercially available sodium silicate typically comes in pentahydrate and nonahydrate forms, which are then dried to obtain gel-phase sodium silicate, as used in the present disclosure. The melting point of sodium silicate without residual water varies between 700°C and 1089°C depending on the ratio of Na₂O to SiO₂, while the melting point of the pentahydrate form is 72°C and that of the nonahydrate form is 48°C, decreasing sharply as water content increases.

With reference to FIG. 4, the sodium silicate of the present disclosure is preferably in the form of a gel metasilicate, where SiO₄ tetrahedrons share one oxygen at the edges to form a continuous chain structure, as depicted on the left side of FIG. 4. Specifically, the molecular structure containing sodium (Na) is shown on the right side of FIG. 4, where silicon atoms (gray spheres), oxygen atoms (red spheres), and sodium atoms (purple spheres) are represented.

Typically, sodium silicate is a colloidal gel state liquid with the formula Na₂SiO₃-nH2O, where "n" is 5, 6, 8, or 9. In the present disclosure, dry gel sodium silicate is used as the raw material. In general, a gel is a porous solid with a 3D network structure formed by approximately 10 to 1 million nanoparticles connected in a liquid dispersion medium. Gels formed from colloidal particles are called colloidal gels, where liquid is trapped within the solid network structure, and the liquid within the gel does not flow freely. When most of the liquid is removed through drying, it is called a dry gel, which can be further categorized as a xerogel, dried through conventional heating or physical methods, or an aerogel, dried through supercritical fluid extraction.

In the present disclosure, sodium silicate with a SiO₂/Na₂O molar ratio of 2.0 or higher, preferably 2.9 or higher, and a solid content of 70% or more, preferably 78% or more, is used. If the SiO₂/Na₂O molar ratio is below 2.0, the yield of enstatite in the final product may be reduced. If the solid content is below 70%, the residual moisture in the sodium silicate may act as a binder during the mechano-chemical reaction, causing the fine powder mixture to layer inside the container and cushion the impact energy of the beads, hindering the reduction reaction of sodium silicate.

### Metal Reducing Agents in Mechano-Chemical Reaction

The metal reducing agents used in the present disclosure include alkali metals with monovalent and divalent electrons, divalent transition metals, trivalent transition metals, and trivalent metals or semimetals of post-transition metals, and alloys thereof. Preferably, the metal reducing agents include one or more of lithium, sodium, potassium, rubidium, cesium, magnesium, calcium, strontium, barium, scandium, yttrium, lanthanum, cerium, praseodymium, neodymium, samarium, europium, gadolinium, dysprosium, holmium, ytterbium, lutetium, titanium, zirconium, hafnium, vanadium, niobium, tantalum, chromium, molybdenum, tungsten, manganese, silver, boron, aluminum, gallium, indium, and bismuth, and compounds thereof. The aforementioned metal reducing agents are added in amounts that participate in the reduction reaction of sodium silicate, facilitated by the impact energy during the mechano-chemical reaction with sodium silicate and other metal reducing agents. The aforementioned metal reducing agents are added within the permissible limit where they can participate in the reduction reaction of sodium silicate through the impact energy during the process reaction or oxidation reaction in a mechano-chemical reaction with sodium silicate and other metal reducing agents, or when the melting point of the single element is 850°C or below.

To prevent unnecessary side reactions and impurities, the total content of elements other than the listed metal reducing agents should be 30% or less, preferably 10% or less.

The metal reducing agents used in the present disclosure are in the form of ribbons, powders, rods, granules, chips, or spheres, with an average equivalent diameter of 10 mm or less. Preferably, the metal reducing agents are in the form of ribbons, powders, rods, granules, chips, or spheres with an average equivalent diameter of 5 mm or less. If the average equivalent diameter of the metal reducing agents exceeds 5 mm, the probability of the metal reducing agent coming into contact and reacting with the silicate precursor during the application of mechanical energy decreases, leading to a higher percentage of unreacted material. This would result in longer reaction times and reduced recovery yields of the nano-silicate composite catalyst due to insufficient reduction.

The amount of metal reducing agent can be mixed at a mole ratio of 0.8 to 1.3 relative to the molecular weight of the silicate precursor. Below a ratio of 0.8, the reduction reaction takes longer, and the yield of the nano-silicate composite catalyst decreases, with intermediate products remaining, potentially deteriorating stability. If the ratio exceeds 1.3, excessive consumption of the metal reducing agent increases manufacturing costs, and the reaction becomes too vigorous, making it difficult to control the reaction stably. Preferably, the ratio is between 0.9 and 1.15, which maximizes the proportion of enstatite and thereby enhances the proportion of ion-conductive silicate.

### Additives for Mechano-Chemical Reaction

In the present disclosure, in addition to the essential raw materials of the silicate precursor and metal reducing agent, additives such as metals, alloys, metal silicides, oxides, chlorides, sulfides, nitrates, borides, fluorides, phosphides, iodides, alkalis, metal hydrides, or organic compounds can be added either individually or in combination.

The metals and alloys used as additives include alkali metals with monovalent and divalent electrons, divalent transition metals, trivalent transition metals, and trivalent post-transition metals. Specific examples include lithium, sodium, potassium, rubidium, cesium, magnesium, calcium, strontium, barium, scandium, yttrium, lanthanum, cerium, praseodymium, neodymium, samarium, europium, gadolinium, dysprosium, holmium, ytterbium, lutetium, titanium, zirconium, hafnium, vanadium, niobium, tantalum, chromium, molybdenum, tungsten, manganese, silver, boron, aluminum, gallium, indium, and bismuth, as well as their alloys. Metal silicides may include magnesium silicide, calcium silicide, titanium silicide, zirconium silicide, hafnium silicide, vanadium silicide, niobium silicide, tantalum silicide, chromium silicide, molybdenum silicide, tungsten silicide, manganese silicide, ferrosilicon, iron disilicide, cobalt silicide, nickel silicide, and aluminum silicide, which can be selected based on the type of electrode. In the present disclosure, the metal, alloy, and metal silicide additives serve a primary role in assisting the reaction of the metal reducing agent during the mechano-chemical reaction, and a secondary role in improving electrical conductivity on the surface of the nano products after the mechano-chemical reaction is completed. Therefore, they can be added during the milling process or additionally mixed after the mechano-chemical reaction has been completed.

Oxide, chloride, sulfide, nitrate, boride, fluoride, phosphide, iodide, and alkali additives can promote the reaction by lowering the melting point of sodium silicate through a process reaction with the silicate precursor, or control the reaction rate by acting as endothermic agents when the temperature inside the container rises excessively due to mechanical energy. Typical oxide additives include silicon oxide, magnesia, quicklime, strontium oxide, yttria, zirconia, titania, and alumina. For example, magnesia, with its high thermal conductivity, can adsorb heat, making it advantageous for lowering the temperature. Common chlorides include sodium chloride, magnesium chloride, and barium chloride, while phosphates, amines, and other substances may also be used. Sulfides may include sodium sulfide, hydrogen sulfide sodium, lithium sulfide, silicon sulfide, and aluminum sulfate. Nitrates include ammonium nitrate, ammonium nitrite, potassium nitrate, potassium nitrite, sodium nitrate, sodium nitrite, lithium nitrate, lithium nitrite, and aluminum nitrate. Borides include boric acid, sodium borohydride, aluminum diboride, sodium borofluoride, and potassium borofluoride. Fluorides include sodium fluoride, lithium fluoride, graphite fluoride, sodium aluminum fluoride, aluminum fluoride, and fluorophosphates. Phosphides include lithium phosphide, sodium phosphide, potassium phosphide, magnesium phosphide, calcium phosphide, and aluminum phosphide. Iodides include ammonium iodide, lithium iodide, sodium iodide, potassium iodide, magnesium iodide, calcium iodide, aluminum iodide, gallium iodide, and germanium iodide. Alkali additives include caustic soda, caustic potash, and soda ash. The metal hydride added during the mechano-chemical reaction may act as a reducing agent. When added after the mechano-chemical reaction, it mixes with the silicate composite catalyst particles, enhancing electrical conductivity and improving ion conductivity, thus contributing to the increased speed of electron and ion diffusion. Examples of metal hydrides used as additives in the present disclosure include lithium hydride, sodium hydride, beryllium hydride, magnesium hydride, potassium hydride, calcium hydride, strontium hydride, nickel hydride, aluminum hydride, lithium-aluminum hydride, sodium-aluminum hydride, potassium-aluminum hydride, magnesium-nickel hydride, lithium amide, lithium imide, lithium borohydride, sodium borohydride, potassium borohydride, magnesium borohydride, calcium borohydride, aluminum borohydride, silicon hydride, silver hydride, barium rhenium hydride, magnesium iron hydride, lanthanum nickel hydride, iron titanium hydride, magnesium-nickel hydride, yttrium hydride, lanthanum hydride, cerium hydride, neodymium hydride, europium hydride, gadolinium hydride, holmium hydride, titanium hydride, zirconium hydride, hafnium hydride, vanadium hydride, and niobium hydride. Organic additives may include glycerol, paraffin oil, silicone oil, unsaturated fatty acids, saturated fatty acids, petroleum jelly, and grease. By adding organic materials, it is possible to prevent premature wear of the container, bead breakage, and excessive temperature rise inside the container when large beads or high-speed rotation are used in large-capacity equipment, which results in excessive localized mechanical energy. These additives can be added individually or in combination, and their total amount can be up to 30% by weight relative to the overall raw material mixture.

### Reduction by Mechano-Chemical Reaction

In the present disclosure, not only the hydrides on the surface of the nano-silicate particles obtained through the mechano-chemical reaction but also the silicide particles exhibit metallic properties, thereby imparting electrical conductivity to the nano-silicate composite catalyst. During the mechano-chemical reaction, oxygen and hydrogen radicals are generated depending on the amount of bound water in the sodium silicate. The oxygen radicals participate in the conversion of sodium silicate to magnesium disodium silicate by reacting with magnesium. The hydrogen radicals reduce the sodium silicate, forming magnesium silicide and hydrides.

Na₂SiO₃ + Mg + 0.5O₂(g) = Na₂MgSiO₄ (Formula 8)

4Mg + SiO₂ = Mg₂Si + 2MgO (Formula 9)

Na₂SiO₃-*n*H₂O + 2Mg = Mg₂SiO₄ + 2NaH + 0.5(*n*-1)O₂(g) (Formula 10)

Mg₂Si + 3SiO₂ = 2MgSiO₃ + 2Si (Formula 11)

Na₂SiO₃-*n*H₂O + 0.5Mg₂Si = Na₂MgSiO₄ + 0.5SiHₓ + (*n*-0.5)H₂(g) (Formula 12)

During the mechano-chemical reaction in the present disclosure, reactions from Formula 8 to Formula 12 occur simultaneously. In the early stages of the reduction reaction, reactions of Formula 9 and Formula 10 are completed first, followed by subsequent reactions between the initially formed magnesium disodium silicate, magnesium silicide, forsterite, enstatite, and metal hydrides with the remaining sodium silicate, completing the reactions in Formula 11 and Formula 12 in the later stages of the reduction reaction. If the ratio of the metal reducing agent to 1 mole of sodium silicate is less than 0.8, the proportion of ion-conducting materials in the nano-silicate composite catalyst decreases, leading to residual unreacted sodium silicate or intermediate products like magnesium silicide, magnesium disodium silicate, and metal hydrides, which may reduce the stability of the nano-silicate composite catalyst. If the ratio of the metal reducing agent to 1 mole of sodium silicate exceeds 1.3, the proportion of enstatite decreases, and the excessive consumption of magnesium leads to an overproduction of forsterite, resulting in inefficient reduction and increased production costs due to the overconsumption of the metal reducing agent. Therefore, in the present disclosure, the molar ratio of the metal reducing agent to 1 mole of sodium silicate is limited to 0.8 to 1.3, preferably 0.9 to 1.15. If the water content in sodium silicate exceeds 2 moles (i.e., when n ≥ 2 in Formula 10 and Formula 12), the reaction tends to favor the formation of silicon oxide over nano-silicate and metal hydride, so it is limited. During the process of completing the second milling step of the mechano-chemical reaction, the reaction is finalized through Formula 10 to Formula 12, yielding nano-silicate composite catalyst particles in which nano-silicon, nano-silicon oxide, or nano-magnesium silicide is mixed with the highly ion-conductive nano-silicate, and the surfaces of these particles are coated with hydrides.

Most of the magnesium silicide formed during the mechano-chemical reaction is converted into enstatite, forsterite, magnesium disodium silicate, and nano-silicon, leaving only small amounts of magnesium silicide or traces at the end of the reaction. The reduced metal elements form various metal hydrides, such as sodium hydride, silicon hydride, or magnesium hydride through Formula 10 and Formula 12, or coexist within the nano-silicate composite, imparting electrical conductivity to the nano-silicate composite.

The total amount of these additives can be up to 30% by weight relative to the total weight of the raw material mixture. Here, the raw material mixture refers to the mixture of the silicate precursor, metal reducing agent, and additives. By limiting this, it is possible to prevent excessive gas generation from significantly increasing the pressure inside the container. Moreover, by limiting excessive addition of additives, it is possible to prevent increased moisture and hydroxyl groups from raising the viscosity of the raw material mixture and adhering to the container walls, which may hinder the mechano-chemical reaction, or prevent impurities from increasing, thereby avoiding the need for additional purification processes.

Referring back to FIG. 3, after mixing the silicate precursor, metal reducing agent, and additives in step (S 100), the steps of mixing beads and performing the first milling (S200) and the second milling (S300) may proceed.

In steps (S200 and S300) of performing a first and a second milling, respectively, mechanical energy is applied to the silicate precursor to induce the reduction reaction. In the first milling step (S200), the reduction reactions in Formula 9 and Formula 10 are induced. At the start of the reduction reaction, the sodium hydride turns gray, and as the reaction progresses, magnesium silicide begins to form, turning the mixture a darker gray. After completing the second milling step (S300), the reduction reactions in Formula 11 and Formula 12 are completed, and a bluish-black product is obtained where nano-silicon, magnesium silicide, and hydrides are uniformly dispersed in the nano-silicate particles.

In an embodiment, sodium silicate powder, which is a dried gel, is used as the silicate precursor, and magnesium powder is used as the metal reducing agent. Dried gel sodium silicate is a porous solid obtained by drying a colloidal gel with a three-dimensional network structure, where SiO₂:Na₂O nano-particles are connected from about ten particles to millions of them. In the present disclosure, a mixture of sodium silicate, metal reducing agent, and additives is referred to as the raw material mixture, and the combination of the raw material mixture with milling beads is called the charge. When mechanical energy is applied to the charge by rotating, the silicate precursor is broken down by shearing and collisions, inducing the reduction reaction.

The resulting reaction product consists of nano-sized silicate particles within sodium silicate that have been momentarily reduced by a high-temperature reaction, allowing for the formation of nano-sized reaction products. Therefore, it has entirely different characteristics from the reaction products obtained by the direct reduction method, where only part of the surface of silicon or silicon oxide undergoes a reaction, resulting in micron-sized products.

The types of milling machines used for the mechanochemical reactions vary depending on the milling method of the container used. These include horizontal bead mills, planetary mills, attritors, fluidized bed jet mills, and vertical roller mills. They can also be classified into batch and continuous types based on the loading method.

When using a horizontal bead mill or planetary mill, only the beads and the raw material mixture can be loaded into the container. On the other hand, for attritors, fluidized bed jet mills, or vertical roller mills, a rotor can be added to the container.

The milling time may vary depending on the type of milling method. Generally, for the same container volume and the same rotation speed, the attritor can shorten the milling time by about three times compared to a horizontal rotating drum mill, and the planetary mill can shorten the time by about five times.

In an attritor, a rotor with bars or discs aligned in various directions and heights can be inserted horizontally within the container. The rotor in the attritor stirs the beads, applying shear force, causing the beads to rub against each other. The rotor is made from or coated with a material that minimizes wear caused by friction with the beads, such as tungsten carbide or hard coating. Additionally, the bars on the rotor can be in the form of pins, knives, connecting hammers, or spiral bars, and the discs on the rotor may have impellers, serrations, or through-holes. By increasing the rotor's rotation speed in the attritor, the frictional energy transmitted to the powder by the beads can exceed the impact energy.

A fluidized bed jet mill works by injecting inert gas or a gas that promotes the reduction reaction into the container where the rotor is installed, either from the side or from below. This causes the milled fine particles to be blown up and classified, with the milled particles of the desired size being collected in a hopper positioned to sort the particles.

A vertical roller mill involves a horizontal circular table installed inside the container. Multiple rollers rotate on the table, milling the powder fed thereonto. Alternatively, pins or bars protrude from a rotating disc attached to the rotor, which rotates and mills the powder using beads. Generally, the rotor, along with the attached bars or discs, is referred to as the rotor without differentiation. In vertical roller mills, gas is also injected from the bottom during milling, and a duct is installed at the top to collect the milled powder.

The container used for milling is made of wear-resistant materials such as metals, e.g., chromium steel, stainless steel, high-chromium cast iron, or stellite, or ceramics e.g., alumina or zirconia. Metal containers can be coated on the inside with wear-resistant materials such as tungsten carbide, chromium carbide, or nitrides. Whether installed horizontally, vertically, or at an incline, these containers fall within the scope of the present disclosure.

The beads used for milling in the present disclosure are made of sintered alumina, silicon carbide, zirconia, or their composites with a Vickers hardness (HV) of 1500 or higher, or they can be made from high-chromium cast iron, chromium steel, or stainless steel. The bead shapes can vary, including disc-shaped, square, triangular, rod-shaped, spherical, or other forms. Preferably, spherical beads, which have the smallest surface area, are used.

The optimal size of the beads depends on the size of the dry-gel sodium silicate particles being milled and the amount of material being loaded. The larger the dry-gel sodium silicate particles and the higher the loading amount, the larger the beads required. Larger beads provide greater impact energy, making the reaction occur more easily, but they also leave more empty space between the beads, increasing the milling time and the average size of the reaction products. Therefore, smaller beads are selected when finer dry-gel sodium silicate particles are to be milled, and when finer reaction products are expected.

To shorten the mechanical chemical reaction time and reduce the average particle size of the reaction products, different sizes of beads can be mixed and used together. This increases the likelihood that the raw material mixture will be subjected to point contact under high pressure between the beads, causing collisions and shear forces without blind spots, thereby facilitating the formation of nano-sized particles. When the bead diameter doubles, the mechanical energy increases by a factor of eight, so the larger beads are responsible for providing the mechanical energy through collisions with the raw material mixture, inducing the reduction reaction. The smaller beads, positioned in the spaces between the larger ones, help to break apart the fused particles through shear force after collisions.

The beads used in the present disclosure can have a diameter ranging from 0.3 mm to 50.8 mm, either as spheres or rods. For example, when using only beads, as in the case of a horizontal rotation mill or a planetary mill, the process may include three types of beads with varying diameters: a first bead, a second bead, and a third bead. Preferably, the first bead has a diameter ranging from 0.3 mm to 6 mm, the second bead ranges from over 6 mm to 13 mm, and the third bead ranges from over 13 mm to 50.8 mm, typically using zirconia balls. In this case, by weight percentage of the total beads, the first bead may constitute 5% to 40%, the second bead may constitute 30% to 90%, and the third bead may constitute 5% to 40%.

In the present disclosure, although the description is based on a general horizontal rotation mill or planetary mill, if high-speed milling is performed using an attritor, fluidized bed jet mill, or vertical roller mill, the third bead can be replaced by the rotor's bar, disk, or roller. When using only beads, as in horizontal or planetary milling, the third bead is required to replace the mechanism that applies shear force to the beads. This ensures that collision energy is consistently maintained even when the volume increases due to layering or micronization during milling. However, in an attritor, fluidized bed jet mill, or vertical roller mill, the high-speed rotation of the rotor replaces the function of the third bead, allowing sufficient frictional energy, greater than collision energy, to be continuously applied to the particles. Therefore, the second and/or third bead can be omitted. When high-speed milling is performed using a rotor in an attritor, fluidized bed jet mill, or vertical roller mill, nano-sized particles can be obtained using only the first bead with a size of 6 mm or less. Moreover, by mixing the second bead in the attritor, fluidized bed jet mill, or vertical roller mill, the time required for the mechanochemical reaction to obtain nano-sized particles can be shortened.

The smaller the size and higher the proportion of the first bead, the easier it is to induce the reaction through mechanical energy, as the particles are well-ground. Conversely, the larger the size and proportion of the third bead, the more mechanical energy is generated, accelerating the reaction and thus shortening the mechanochemical reaction time. However, beads smaller than 0.3 mm in diameter have the disadvantage that smaller mesh sizes are required during the separation of the reactants, increasing the number of grading steps and processing time. Additionally, beads larger than 50.8 mm in diameter generate more collision energy, which can increase the wear rate of both the container inner walls and the beads.

It is possible to load beads of more than three different sizes, mixed together. The size, shape, and mixing ratio of the beads can vary based on the weight ratio per bead size, the amount loaded, the milling time, the mechanical energy applied, and the desired size of the final product. For example, as shown in Table 1 below, if balls smaller than 3.2 mm are mixed, the silicate precursor can be ground into nanoparticles, while balls larger than 9.5 mm can be used to facilitate the reduction reaction. The higher the proportion of large-diameter beads, the greater the impact energy, making the reduction reaction easier and more favorable for low-speed, large-capacity containers. Conversely, the higher the proportion of small-diameter beads, the better the grinding, making it easier to produce fine powder, which is advantageous for high-speed, small-capacity containers.

In an embodiment of the present disclosure, to induce the reaction between dry gel sodium silicate and metal reductant powder, beads with a minimum size of 8 mm or larger may be included, and to obtain aggregates of monodispersed nanoparticles, beads no larger than 10 mm may be included. If only beads smaller than 8 mm are used for milling, there may not be enough mechanical energy to initiate a sufficient reduction reaction in the milled raw material mixture, causing the milling time to become excessively long. If only beads larger than 10 mm are used, the yield of enstatite may decrease, lowering productivity. Preferably, beads between 0.3 mm and 50.8 mm in diameter may be used, and more preferably, a mixture of beads with diameters between 1.6 mm and 31.8 mm, in at least three different sizes, can be used.

The following Table 1 shows examples of the mechanical energy ratios of beads loaded into the container and the size of the milled particles. As the bead size decreases, the size of the milled raw material mixture becomes finer, and the bead-to-raw material mixture size ratio increases. Meanwhile, in an attritor system, it is estimated that the rotor speed, which is typically more than twice the rotational speed of a horizontal or planetary system, generates frictional energy greater than the collision energy obtained in horizontal or planetary systems.

**TABLE 1: Example of Bead and Milled Raw Material Mixture Particle Sizes**

| Diameter (mm) | Bead force ratio | Milled size (µm) | Size ratio of Bead/Mixture |
|---|---|---|---|
| 0.4 | 2.0×10⁻³ | 0.24 | 1667 |
| 0.8 | 1.6×10⁻² | 0.98 | 816 |
| 1.6 | 1.3×10⁻¹ | 3.91 | 409 |
| 3.2 | 1.0 | 15.6 | 205 |
| 6.4 | 8.0 | 62.5 | 102 |
| 12.7 | 64 | 250 | 51 |
| 25.4 | 512 | 1000 | 25 |

On the other hand, the weight ratio of the beads to the total weight of the bead and raw material mixture can be between 50% and 95%, preferably between 60% and 86%. The remainder consists of the silicate precursor, metal reducing agent, and additive mixtures. If the bead ratio is less than 50%, the mechanical chemical reaction of the raw material mixture takes too long, and if it exceeds 95%, the amount of reaction material becomes too small, significantly reducing productivity.

The amount of beads and raw material mixture loaded into the container varies depending on the milling method but should be loaded to no more than 85% of the container's volume, and preferably 75% or less. If the loading volume exceeds 85%, it becomes difficult for the beads to tumble inside the container as it rotates, resulting in less impact energy being applied to the raw material mixture between the beads. Furthermore, insufficient space to buffer the volume expansion from milling may occur. In such cases, the likelihood of melting the dry-gel sodium silicate and the metal reducing agent decreases, making it difficult to initiate the reduction reaction, so the loading volume should be no more than 85%. Additionally, if the amount of raw material mixture and beads fills less than 25% of the container volume, the mixture may stick to the inner wall and rotate as one mass, preventing effective milling. Therefore, it is desirable that the raw material mixture and beads fill at least 25% of the container volume. More preferably, the mixture and beads should fill between 30% and 75% of the container volume.

Meanwhile, in the first milling stage (S200), low-speed milling may be performed to ensure that the raw material mixtures are uniformly mixed and ground by shear forces. The appropriate rotational speed can be determined by covering the container with a transparent temporary cover for visual observation or by judging from the sound made inside the container. The maximum speed for low-speed milling is reached when the beads begin to tilt and roll or when you hear the beads hitting the container wall. Comparing the low-speed milling conditions to the rotational speed of the container, depending on the container size and type, a planetary mill with a capacity of 250 ml to 500 ml is suitable when rotating at approximately 50 to 320 rpm, preferably about 200 to 300 rpm.

This low-speed milling process can be carried out for a duration that constitutes 2% to 50% of the total milling time. If the low-speed milling time is less than 2%, the dispersion of the metal reducing agent may be insufficient, resulting in the excessive formation of forsterite, silicon oxide, and magnesium silicide, which could lead to an increase in the size of the nanoparticles and reduce the performance of the nano-silicate composite catalyst. On the other hand, if the low-speed milling time exceeds 50%, production efficiency may decrease. Preferably, the low-speed milling time should be between 5% and 25% (both inclusive) of the total milling time.

In the second milling stage (S300), high-speed milling may be carried out, during which the raw material mixture collides with the beads, causing a reduction reaction. The appropriate rotational speed can be determined by covering the container with a transparent temporary cover for visual observation or judging by the sound from inside the container. When the sound of beads hitting the container wall becomes audible, this indicates the minimum speed for high-speed milling. Conversely, when there is little sound of beads rubbing against each other or hitting the container wall, it indicates the maximum speed for high-speed milling. Comparing the high-speed milling conditions to the container's rotational speed, depending on its size and type, a planetary mill with a capacity of 250 ml to 500 ml is suitable when rotating at approximately 330 to 550 rpm, preferably around 350 to 450 rpm.

Meanwhile, the process of reduction reaction occurring inside the container during milling proceeds as follows:
After mixing the raw materials and beads in the container and rotating the container or the bar, the mixture moves. The relatively large and heavy beads roll and rub against each other, applying shear force to the raw material mixture. As the large, hard beads are lifted and then dropped, they apply impact and shear forces to the raw material mixture. Depending on the type of milling machine, an arc-shaped, straight, or inclined bar or a rotating shaft with wings may be inserted into the container to apply shear force to the materials, causing grinding and reduction reactions to occur through the shearing and collision of the beads with the raw material mixture.

In one embodiment, when sodium silicate powder as the silicate precursor and magnesium powder as the metal reducing agent are mixed to induce a mechanical chemical reaction, a reaction occurs according to Formulas 8 through 12, synthesizing enstatite, forsterite, magnesium disodium silicate, and metal hydrides.

When sodium silicate or the metal reducing agent (or both) reaches its melting point due to the impact energy of the beads, the reduction occurs, producing nano-silicate composites such as enstatite, forsterite, magnesium disodium silicate particles, and magnesium silicide particles. At this time, the molar ratio of sodium silicate to the metal reducing agent can be between 0.8 and 1.3. If the ratio is less than 0.8, unreacted sodium silicate or sodium oxide will remain, and if it exceeds 1.3, the proportion of enstatite and magnesium disodium silicate will decrease, while the production of forsterite, which consumes excess magnesium, will increase, preventing efficient reduction. Preferably, the molar ratio should be between 0.9 and 1.15 to maximize the yield of enstatite.

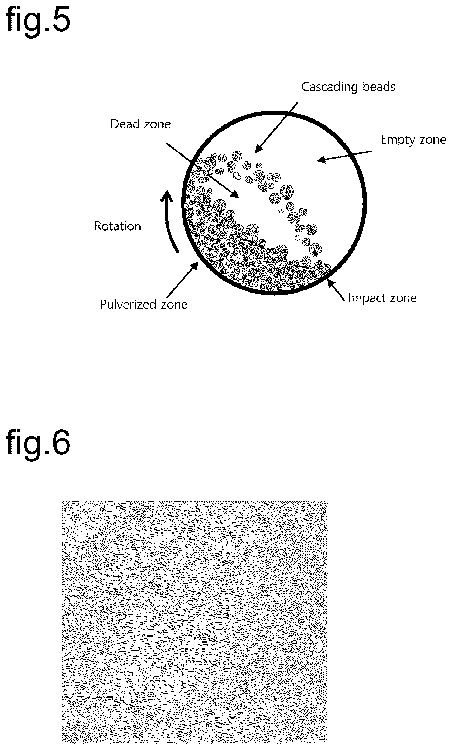

Referring to FIG. 5, the actions of the beads and raw material mixtures inside the container during the mechanochemical reaction are explained. FIG. 5 is a conceptual diagram illustrating the milling process of beads and raw material mixtures inside a container rotating in a horizontal bead mill or planetary mill. The large circle represents the container, the gray spheres represent the beads, the brown spheres represent the silicate precursor, and the white speckled spheres represent the metal reducing agent. Since additives are not essential raw materials, they are omitted from the diagram.

During the mechanochemical reaction, the powdered raw material mixture, melted by collisions between the charged materials, may adhere to the container wall, gradually thickening and forming a buffer layer, making it difficult to expect effective reactions. This phenomenon occurs when the beads are too heavy or when there is an excessive proportion of large beads, resulting in excessive impact energy that causes the silicate to melt and adhere to the container inner wall. Therefore, it is necessary to adjust the ratio of bead sizes and weights or the rotational speed of the container or rotor to allow the beads to move smoothly, enabling collision and rolling movements within the container. If the rotational speed is too slow, the angle of inclination of the charged materials inside the container becomes shallow, causing the beads to rub against each other, resulting in the crushing and mixing of the raw material mixture primarily due to shear force. As the rotational speed increases, the rolling and collision movements of the beads cause reduction reactions to occur in the raw material mixture. The appropriate rotational speed can be determined by covering the container with a transparent temporary cover for visual observation or by detecting the sound from the outer wall of the container. When checking the rotational speed based on the amount of material loaded, the minimum limit rotational speed is when the beads are inclined at an angle of approximately 25° or more and rolling.

As the rotational speed increases to the point where the beads are inclined at an angle of approximately 40° or more and begin to bounce and collide more frequently, the reduction reaction is accelerated. If the angle exceeds 60°, the beads do not collide with the raw material mixture, and the number of beads that bounce or roll decreases, while the charged materials begin to rotate together, sticking to the container inner wall due to centrifugal force. This marks the maximum limit rotational speed. Therefore, at angles below 25° and above 60°, collisions or rolling movements between the beads and the raw material mixture decrease, making it difficult to initiate reduction reactions in the raw material mixture.

Depending on the size and type of the container, a high-speed motor system such as a smaller container or an attritor system with a rotor speed reaching up to 22,000 rpm, when used in combination with beads of 3 mm or less, can produce nanoparticles in a short amount of time. In general, even with a motor system operating between 60 and 650 rpm, preferably between 150 and 350 rpm, using a horizontal bead mill or a planetary mill, the reaction between the raw material mixtures can still be achieved.

The container may be equipped with a device to suppress the temperature increase during the mechanochemical reaction to prevent flammable intermediates, such as magnesium silicide, from igniting. This can be implemented by attaching a circulating line of coolant fluid in contact with the container wall, which is circulated by a pump. Alternatively, a secondary tank with a cooling function can be attached, where a filter and circulation line at the bottom of the container allow the milled fine powder to move to the secondary tank, cool, and then be reintroduced into the container by the circulation pump. There are various methods to suppress the continuous rise in the container's internal temperature. Additionally, the motor that rotates the container can be controlled by a PLC circuit or sequence control device to introduce rest periods during milling. Oxygen gas, water, magnesia, silicon oxide, or other oxides can be added through a line to promote or inhibit the reaction, thereby controlling the container's internal temperature. A bypass valve can also be installed to prevent excessive pressure build-up inside the container due to gases produced during the reduction reaction.

After the mechanochemical reaction, the product is recovered in a powder or dry paste form. The nano-silicate composite catalyst obtained as a reaction product contains monodispersed nanoparticles, including silicon, silicon oxide, and magnesium silicide.

In the present disclosure, the silicon oxide in the reaction product undergoes a reversible reaction, being reduced to silicon and then oxidized again, so it does not pose a problem. However, if the silicon oxide content in the nano-silicate composite catalyst exceeds 20% by molar ratio, both electrical conductivity and ionic conductivity decrease, and during electrochemical reactions, the formation of irreversible compounds according to Equation 4 increases due to overpotential and impedance. Therefore, its content is limited.

Additionally, the reduced sodium produced during the intermediate stage mainly exists as metal hydride in the final stage, as per Equation 11, enhancing the conductivity of the anode material and improving the stability and reversibility of the electrochemical reaction while suppressing the growth of dendrites on the anode.

The following are specific examples of the present disclosure. A better understanding of the present disclosure may be obtained through the following examples that are set forth to illustrate, but are not to be construed to limit, the scope of the present invention. Moreover, the features, structures, and effects illustrated in each embodiment may be combined or modified with other embodiments by those skilled in the art, depending on the technical field to which they belong. Therefore, such combinations and modifications are to be interpreted as being within the scope of the present invention.

### EXAMPLE 1

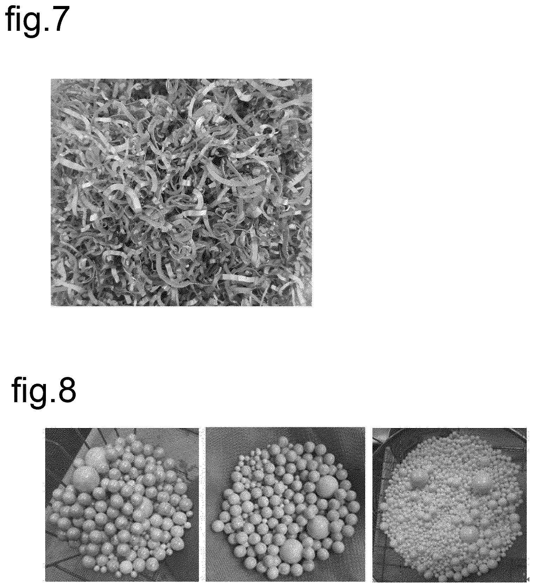

76 Grams of sodium silicate such as in FIG. 6 (with a particle size of approximately 1 mm or smaller, a SiO₂/Na₂O molar ratio of 3.0±0.1, a solid content ratio of 82%, and a specific gravity of 2.6 g/cm³) and 16.25 g of magnesium chip powder such as in FIG. 7 (with a thickness of 0.3 mm or smaller and a purity of 98.6% or higher) were added and mixed with 11 g of additives including 2 g of magnesia, 1 g of sodium chloride, 3 g of caustic soda, 4 g of paraffin oil, and 1 g of glycerol. The molar ratio of the metal reducing agent to the silicate precursor was 1.07. FIG. 8 shows an example of the zirconia bead combination used, where 20 g of 3 mm diameter beads, 150 g of 5 mm diameter beads (classified as first beads), 300 g of 10 mm diameter beads (classified as second beads), and 31 g of 15 mm diameter beads (classified as third beads) were mixed. The 250 ml-zirconia vessel was filled to about 3/4 of its volume, and the zirconia vessel lid was sealed. Then, a planetary mill was used to mix the materials evenly at 230 rpm for 0.5 hours at low speed, followed by high-speed milling at 450 rpm for 2 and 6 hours, respectively, to check the results.

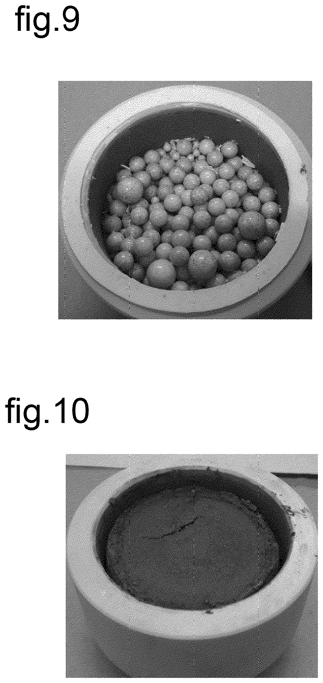

FIG. 9 shows the state of milling after 2 hours in Example 1. It indicates the formation of sodium hydride early in the reduction reaction, with the material turning gray. As the process continued, the mixture darkened, signaling the beginning of magnesium silicide formation.

FIG. 10 shows the state after 6 hours of milling in Example 1, where the reduction reaction was completed. The nano-silicate composite catalyst particles appeared as nano-sized particles with a slightly bluish-black color, indicating the presence of nano-silicon, magnesium silicide, and hydrides.

FIG. 11 shows the XRD (X-ray diffraction) analysis results of Example 1. As seen in FIG. 11, the peak intensity of enstatite was the highest at approximately 74.3%, followed by forsterite at about 2.9%, sodium hydride at about 4.5%, silicon at about 11.1%, silicon oxide at about 5.5%, and magnesium silicide at about 1.7%. When comparing the sum of the peaks, the total intensity of the ion-conductive materials (enstatite, forsterite, and sodium hydride) was 4.47 times higher than that of the non-ion-conductive materials (silicon, silicon oxide, and magnesium silicide). This indicates that the main material of the nano-silicate composite catalyst is enstatite.

Additionally, using the Scherrer Formula to calculate the particle size, focusing on clearly distinguishable peaks (excluding very small peaks), the particle sizes were determined to be between 2.8 nm and 32.5 nm, with most particles ranging from 4.6 nm to 29.7 nm, as analyzed by XRD, satisfying the nano-particle size requirements of the present disclosure.

In the Scherrer Formula used for the calculations:
D = particle size (nm),
K = dimensionless shape factor (Scherrer constant),
λ = X-ray wavelength,
β = full width at half maximum (FWHM) in radians,
θ = Bragg angle in radians (position of the peak).

### EXAMPLE 2

Using the same method as in Example 1, 76 g of sodium silicate and 17 g of magnesium chip powder, totaling 93 g of raw materials, were mixed with 2 g of slaked lime, 3 g of sodium chloride, 2 g of potassium hydroxide, 5 g of dimethyl silicone oil, and 3 g of stearic acid (as a saturated fatty acid), totaling 15 g of additives. The molar ratio of the metal reducing agent to the silicate precursor was 1.12. Zirconia beads were used, with a composition of 20 g of 3 mm diameter balls and 150 g of 5 mm diameter balls (classified as first beads), 300 g of 10 mm diameter balls (classified as second beads), and 31 g of 15 mm diameter balls (classified as third beads). These were loaded into a 250 ml zirconia vessel along with the raw material mixture. As in Example 1, low-speed milling was performed for 0.5 hours to mix the materials, followed by high-speed milling for a total of 6 hours to obtain the nano-silicate composite catalyst.

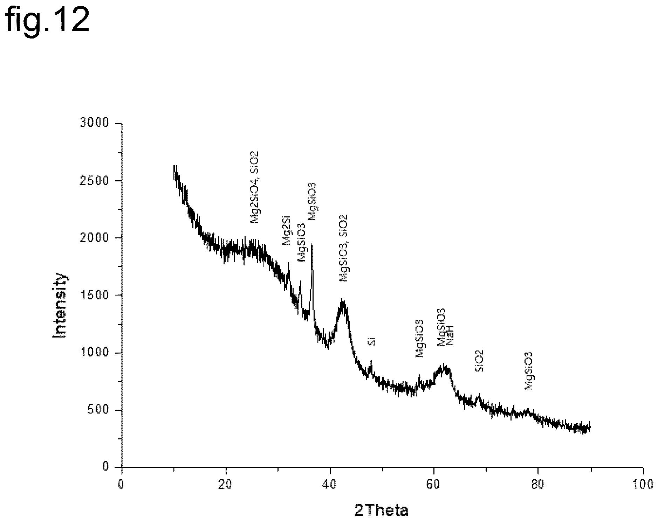

FIG. 12 shows the XRD analysis results for Example 2. As shown in FIG. 12, the total intensity of the enstatite peaks was the highest at approximately 67.6%, followed by silicon oxide at 14.0%, magnesium silicide at 9.3%, sodium hydride at 4.8%, silicon at 2.9%, and forsterite at 1.4%. When comparing the sum of the peak intensities of the ion-conductive and non-ion-conductive materials, the sum of the ion-conductive material peaks was 2.8 times greater, indicating that the main material of the nano-silicate composite catalyst was enstatite.

Additionally, based on the XRD analysis, excluding very small peaks, the particle sizes were calculated using the Scherrer Formula on the sufficiently distinguishable peaks. The particle sizes were found to range from 2.8 to 27.2 nm, with most particles distributed between 3.5 and 20.3 nm, meeting the nano-particle size requirements of the present disclosure.

### EXAMPLE 3

Using the same method as in Example 1, 52 g of sodium silicate and 13.5 g of magnesium chip powder, totaling 65.5 g of raw materials, were mixed with 2 g of alumina, 3 g of magnesium chloride, 2 g of sodium hydroxide, 5 g of paraffin oil, and 2 g of petroleum jelly, for a total of 14 g of additives. The molar ratio of the metal reducing agent to the silicate precursor was 1.30. Zirconia beads were used, with a composition of 20 g of 3 mm diameter balls and 150 g of 5 mm diameter balls (classified as first beads), 300 g of 10 mm diameter balls (classified as second beads), and 31 g of 15 mm diameter balls (classified as third beads). These were loaded into a 250 ml zirconia vessel along with the raw material mixture. As in Example 1, low-speed milling was performed for 0.5 hours to mix the materials, followed by high-speed milling for a total of 6 hours to obtain the nano-silicate composite catalyst.

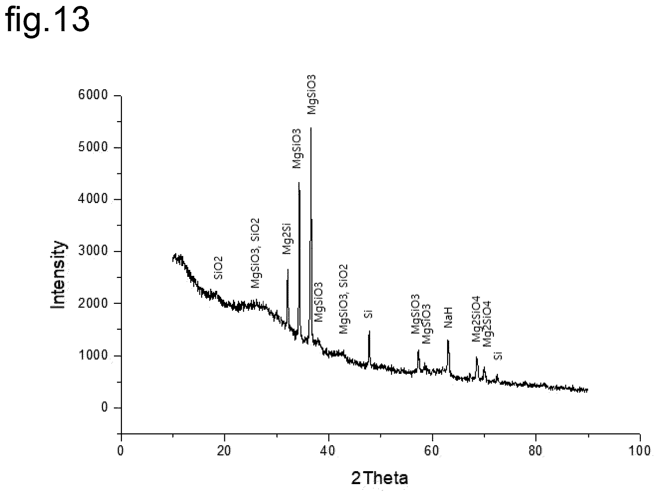

FIG. 13 shows the XRD analysis results for Example 3. As shown in FIG. 13, the total intensity of the enstatite peaks was the highest at approximately 74.1%, followed by magnesium silicide at about 10.0%, silicon at about 7.1%, sodium hydride at about 5.7%, forsterite at about 1.6%, and silicon oxide at about 1.5%. When comparing the sum of the peak intensities of the ion-conductive and non-ion-conductive materials, the sum of the ion-conductive material peaks was 4.37 times greater, indicating that the main material of the nano-silicate composite catalyst was enstatite.

Additionally, based on the XRD analysis, excluding very small peaks, the particle sizes were calculated using the Scherrer Formula on the sufficiently distinguishable peaks. The particle sizes were found to range from 2.8 to 84.9 nm, with most particles distributed between 5.2 and 65.0 nm, meeting the nano-particle size requirements of the present disclosure.

### EXAMPLE 4

Using the same method as in Example 1, 75 g of sodium silicate and 12 g of magnesium chip powder, totaling 87 g of raw materials, were mixed with 3 g of magnesia, 3 g of magnesium chloride, 3 g of sodium hydroxide, 3 g of glycerol, and 2 g of grease, for a total of 14 g of additives. The molar ratio of the metal reducing agent to the silicate precursor was 0.8. Zirconia beads were used, with a composition of 20 g of 3 mm diameter balls, 150 g of 5 mm diameter balls (classified as first beads), 300 g of 10 mm diameter balls (classified as second beads), and 31 g of 15 mm diameter balls (classified as third beads). These were loaded into a 250 ml zirconia vessel along with the raw material mixture. As in Example 1, low-speed milling was performed for 0.5 hours to mix the materials, followed by high-speed milling for a total of 6 hours to obtain the nano-silicate composite.

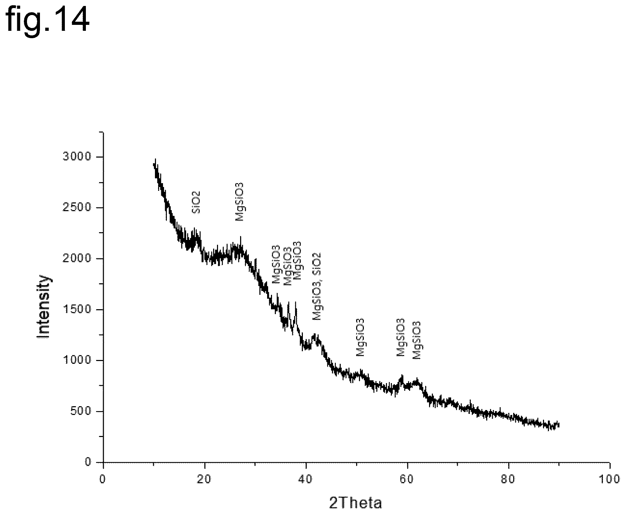

FIG. 14 shows the XRD analysis results for Example 4. As seen in FIG. 14, the total intensity of the enstatite peaks was the highest at approximately 87.4%, with silicon oxide at about 12.6%. Comparing the sum of the peak intensities of the non-ion-conductive material (silicon oxide) and the ion-conductive material (enstatite), the ratio was approximately 6.94, indicating that the main material in the nano-silicate composite catalyst was enstatite.

Additionally, based on the XRD analysis, excluding very small peaks, the particle sizes were calculated using the Scherrer Formula. The particle sizes ranged from 2.8 to 32.7 nm, with most particles distributed between 2.8 and 14.8 nm, satisfying the nano-particle size requirements of the present disclosure.

### EXAMPLE 5

Using the same method as in Example 1, 76.3 g of sodium silicate and 15.2 g of magnesium chip powder, totaling 91.5 g of raw materials, were mixed with a total of 14 g of additives including 4 g of silicon oxide with a surface area of approximately 180 m² and particle sizes of 20 to 50 nm, 3 g of sodium chloride, 1 g of sodium hydroxide, 3 g of dimethyl silicone oil, and 3 g of shortening (as a saturated fatty acid). The molar ratio of the metal reducing agent to the silicate precursor was 1.0. Zirconia beads were used, with a composition of 20 g of 3 mm diameter balls and 150 g of 5 mm diameter balls (classified as first beads), 299 g of 10 mm diameter balls (classified as second beads), and 31 g of 15 mm diameter balls (classified as third beads). These were loaded into a 250 ml zirconia vessel along with the raw material mixture. Low-speed milling was performed for 0.25 hours to mix the materials, followed by high-speed milling for a total of 5 hours to obtain the nano-silicate composite catalyst.

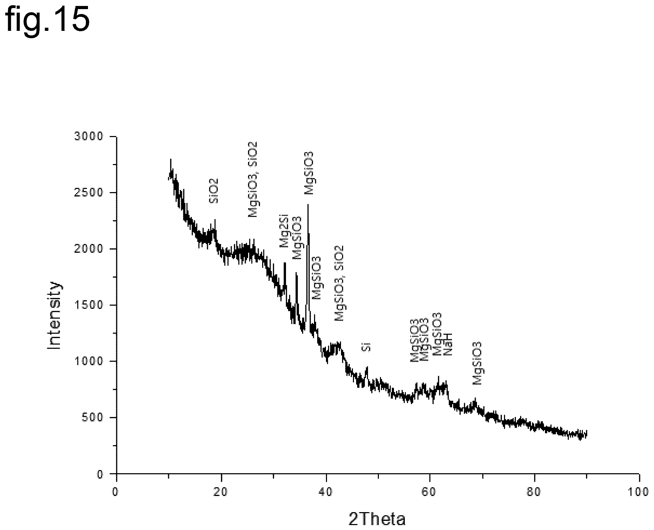

FIG. 15 shows the XRD analysis results for Example 5. As seen in FIG. 15, the total intensity of the enstatite peaks was the highest at approximately 72.4%, followed by magnesium silicide at about 10.0%, forsterite at about 7.0%, silicon oxide at about 6.0%, and silicon at about 4.6%. Comparing the sum of the peak intensities of the non-ion-conductive materials and the ion-conductive materials, the ratio was approximately 4.17, indicating that the main material in the nano-silicate composite catalyst was enstatite.

Additionally, based on the XRD analysis, excluding very small peaks, the particle sizes were calculated using the Scherrer Formula. The particle sizes ranged from 2.8 to 54.2 nm, with most particles distributed between 2.8 and 36.3 nm, satisfying the nano-particle size requirements of the present disclosure.

### EXAMPLE 6

Using the same method as in Example 1, 76.3 g of sodium silicate and 15.2 g of magnesium chip powder, totaling 91.5 g of raw materials, were mixed with a total of 12 g of additives including 2 g of silicon oxide with a surface area of approximately 180 m² and particle sizes of 20 to 50 nm, 2 g of magnesium chloride, 3 g of sodium hydroxide, 3 g of dimethyl silicone oil, and 2 g of paraffin oil. The molar ratio of the metal reducing agent to the silicate precursor was 1.0. Zirconia beads were used, with a composition of 20 g of 3 mm diameter balls and 150 g of 5 mm diameter balls (classified as first beads), 300 g of 10 mm diameter balls (classified as second beads), and 31 g of 15 mm diameter balls (classified as third beads). These were loaded into a 250 ml zirconia vessel along with the raw material mixture. Low-speed milling was performed in the same manner as in Example 1 for 0.25 hours to mix the materials, followed by high-speed milling for a total of 5 hours to obtain the nano-silicate composite catalyst.

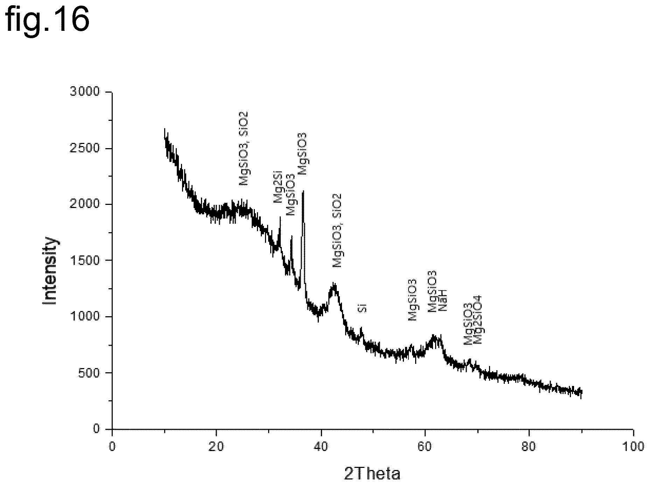

FIG. 16 shows the XRD analysis results for Example 6. As seen in FIG. 16, the total intensity of the enstatite peaks was the highest at approximately 73.6%, followed by forsterite at about 12.1%, magnesium silicide at about 10.7%, silicon oxide at about 7.8%, and silicon at about 3.6%. Comparing the sum of the peak intensities of the non-ion-conductive materials and the ion-conductive materials, the ratio was approximately 3.88, indicating that the main material in the nano-silicate composite catalyst was enstatite.

Additionally, based on the XRD analysis, excluding very small peaks, the particle sizes were calculated using the Scherrer Formula. The particle sizes ranged from 2.8 to 53.8 nm, with most particles distributed between 9.3 and 27.2 nm, satisfying the nano-particle size requirements of the present disclosure.

### EXAMPLE 7

Using the same method as in Example 1, 76.3 g of sodium silicate and 13.3 g of magnesium chip powder, totaling 89.6 g of raw materials, were mixed with 5 g of magnesium oxide, 3 g of sodium hydroxide, and 5 g of dimethyl silicone oil as additives, for a total of 13 g. The molar ratio of the metal reducing agent to the silicate precursor was 0.88. Zirconia beads were used, with the bead weight distribution as follows: 20 g of 3 mm diameter balls and 150 g of 5 mm diameter balls (classified as first beads), 300 g of 10 mm diameter balls (classified as second beads), and 31 g of 15 mm diameter balls (classified as third beads). These were loaded into a 250 ml zirconia vessel along with the raw material mixture. Low-speed milling was performed in the same manner as in Example 1 for 0.25 hours to mix the materials, followed by high-speed milling for a total of 5 hours to obtain the nano-silicate composite catalyst.

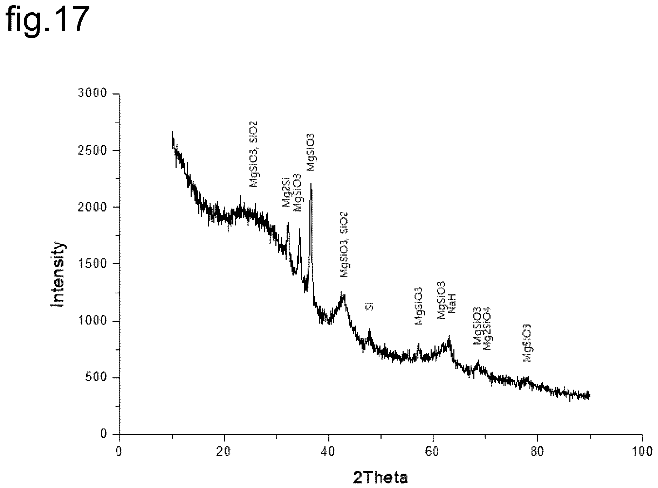

FIG. 17 shows the XRD analysis results for Example 7. As seen in FIG. 17, the total intensity of the enstatite peaks was the highest at approximately 77.2%, followed by magnesium silicide about at 12.0%, silicon at about 6.6%, silicon oxide at about 5.9%, sodium hydride at about 2.4%, and forsterite at about 1.8%. Comparing the sum of the peak intensities of the non-ion-conductive materials and the ion-conductive materials, the ratio was approximately 3.32, indicating that the main material in the nano-silicate composite catalyst was enstatite.

Additionally, based on the XRD analysis, excluding very small peaks, the particle sizes were calculated using the Scherrer Formula. The particle sizes ranged from 2.8 to 54.2 nm, with most particles distributed between 6.0 and 32.7 nm, satisfying the nano-particle size requirements of the present disclosure.

### COMPARATIVE EXAMPLE

53 Grams of sodium silicate and 17 g of magnesium chip powder, totaling 70 g of raw materials, were mixed with 5 g of sodium chloride, 2 g of sodium hydroxide, 3 g of dimethyl silicone oil, and 4 g of petroleum jelly as additives, amounting to a total of 14 g. The molar ratio of the metal reducing agent to the silicate precursor was 1.61, which differs from the molar ratios of 0.8 to 1.3 used in previous examples. Zirconia beads were used, with the following weight distribution: 20 g of 3 mm diameter balls, 150 g of 5 mm diameter balls (first beads), 300 g of 10 mm diameter balls (second beads), and 31 g of 15 mm diameter balls (third beads). The mixture was loaded into a 250 ml zirconia vessel. The same method as in Example 1 was followed, with low-speed milling for 0.5 hours to mix the ingredients, followed by high-speed milling for a total of 6 hours. The vessel temperature became too hot to touch, so an ice pack was wrapped around the zirconia vessel for 2 hours to cool it down, after which the nano-silicate composite catalyst was obtained.

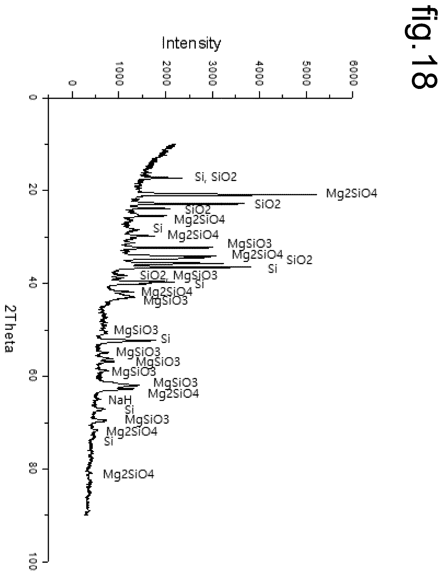

FIG. 18 shows the XRD analysis results for this comparative example. In FIG. 18, it is evident that the forsterite peak intensity is the highest at approximately about 29.0%, followed by silicon at about 26.4%, enstatite at about 22.4%, silicon oxide at about 21.9%, and sodium hydride at about 0.3%. Comparing the peak intensities of the different compounds reveals that, unlike the previous examples, there is a significant increase in non-ion-conducting materials, leading to a reduced ion conductivity enhancement. Additionally, the excess amount of the metal reducing agent led to increased production costs, intense reduction reactions during milling, and instability of the product due to potential combustion when exposed to the atmosphere because of the metal hydrides.

Furthermore, the XRD analysis revealed that, aside from the very small peaks, the particle sizes calculated using the Scherrer Formula ranged from 12.3 to 64.3 nm. The particle size distribution was broad, with fewer fine particles, satisfying the nano-particle size requirements outlined in the invention.

Compared with each other, Examples 1 to 7 have the use of enstatite as the main material in common while the composition of the raw material mixtures and milling conditions resulted in slight variations in phase transitions of the nano-silicate particles, leading to differences in peak positions and intensities for the respective compounds.

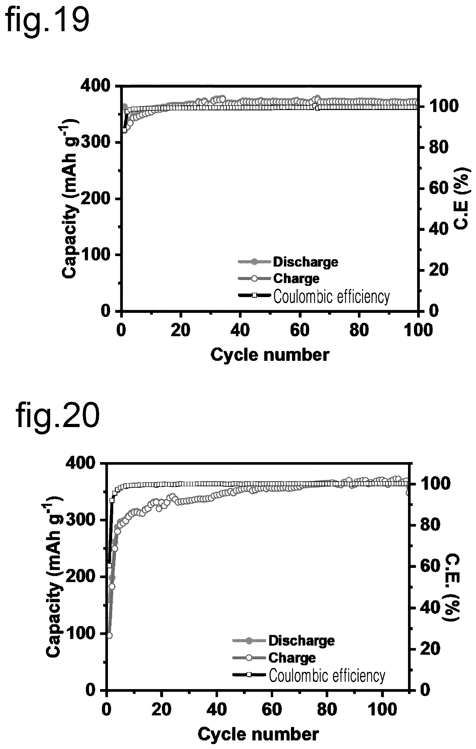

A battery test was conducted using the nano-silicate composite catalyst from Example 1 as an anode material. Specifically, the nano-silicate composite catalyst according to Example 1 was added to natural graphite at a weight ratio of 5%. The test results, as shown in FIG. 19, demonstrate that the battery capacity and Coulombic efficiency remained high from the beginning. The battery tests using the nano-silicate composite catalysts from Examples 2 through 7 as anode materials produced similar results to those in FIG. 19.

The consistently high Coulombic efficiency from the outset indicates that the silicate composite catalyst stabilized the electrochemical system, thereby maintaining the reversibility of the electrochemical reactions. This demonstrates the superior ion conductivity of the nano-silicate composite catalyst, as well as its buffering capability, which effectively stabilizes the localized physical and chemical environment surrounding the anode particles during electrochemical reactions.

In contrast, FIG. 20 presents the results of a battery test using natural graphite anode without the addition of a nano-silicate catalyst under the same condition as in FIG. 19. Initially, the electrochemical reactions were sluggish, resulting in lower battery capacity and Coulombic efficiency. Only after 70 cycles did the battery reach the typical capacity of natural graphite.

In addition, embodiments are mostly described above. However, they are only examples and do not limit the present invention. A person skilled in the art may appreciate that several variations and applications not presented above may be made without departing from the essential characteristic of embodiments. For example, each component specifically represented in the embodiments may be varied. In addition, it should be construed that differences related to such a variation and such an application are included in the scope of the present invention defined in the following claims.

## Claims

1. An electrochemical catalyst comprising a nano-silicate composite including enstatite (MgSiOs), forsterite (Mg₂SiO₄), nano-silicon, nano-silicon oxide, and a hydride.

2. The electrochemical catalyst of claim 1, wherein the enstatite has an asymmetric crystal structure.

3. The electrochemical catalyst of claim 1, wherein the hydride comprises at least one of a metal hydride and a silicon hydride.

4. The electrochemical catalyst of claim 1, wherein the hydride is selected from the group consisting of a sodium hydride, a silicon hydride, and a magnesium hydride.

5. The electrochemical catalyst of claim 1, wherein the hydride is located on a surface of the nano-silicate composite.

6. The electrochemical catalyst of claim 1, wherein the nano-silicon and nano-silicon oxide are monodispersed nanoparticles.

7. The electrochemical catalyst of claim 1, wherein the particles constituting the nano-silicate composite have an average diameter of 2 nm to 150 nm.

8. The electrochemical catalyst of claim 1, wherein the enstatite has a peak intensity greater than those of other particles, as measured by X-ray diffraction analysis.

9. The electrochemical catalyst of claim 1, further comprising at least one of sodium magnesium silicate (Na₂MgSiO₄) and magnesium silicide (Mg₂Si).

10. A method for manufacturing an electrochemical catalyst comprising a nano-silicate composite, the method comprising the steps of:
mixing a silicate precursor, a metal reductant, and an additive;
mixing the silicate precursor, the metal reductant, and the additive with beads and performing a first milling process; and
performing a second milling process after the first milling.

11. The method of claim 10, wherein the silicate precursor is a gel-phase silicate.

12. The method of claim 10, wherein the silicate precursor is silicate including least one selected from the group consisting of alkali metals, alkaline earth metals, transition metals, and post-transition metals.

13. The method of claim 10, wherein the metal reductant is selected from metals or alloys of alkali metals, alkaline earth metals, transition metals, and post-transition metals.

14. The method of claim 10, wherein the metal reductant is included at a molar ratio of 0.8 to 1.3 relative to the molecular weight of the silicate precursor.

15. The method of claim 10, wherein the first milling is a low-speed milling compared to the second milling.

## Amended claims

### Amended claims in accordance with Rule 137(2) EPC.

1. An electrochemical catalyst comprising a nano-silicate composite including enstatite (MgSiO₃), forsterite (Mg₂SiO₄), nano-silicon, nano-silicon oxide, and sodium hydride (NaH),
wherein the sodium hydride (NaH) is **characterized by** X-ray diffraction (XRD) peaks appearing at 61.0-63.0°.

2. The electrochemical catalyst of claim 1, wherein the enstatite has a monoclinic or orthorhombic structure.

3. The electrochemical catalyst of claim 1, wherein the sodium hydride is located on a surface of the nano-silicate composite.

4. A method for manufacturing an electrochemical catalyst comprising a nano-silicate composite, the method comprising the steps of:
mixing a silicate precursor, a magnesium chip powder as a metal reductant, and an additive;
mixing the silicate precursor, the metal reductant, and the additive with beads and performing a first milling process; and
performing a second milling process after the first milling,
wherein the second milling process is high-speed milling at 350 to 450 rpm in a planetary mill with a capacity of 250 ml to 500 ml.

5. The method of claim 10, wherein the silicate precursor is a gel-phase silicate.

6. The method of claim 10, wherein the silicate precursor is silicate including least one selected from the group consisting of alkali metals, alkaline earth metals, transition metals, and post-transition metals.

7. The method of claim 10, wherein the metal reductant is included at a molar ratio of 0.8 to 1.3 relative to the molecular weight of the silicate precursor.

8. The method of claim 10, wherein the first milling is a low-speed milling compared to the second milling.
